(19) Europäisches Patentamt
European Patent Office
Office européen des brevets

(11) **EP 2 575 077 B1**

(12) **EUROPEAN PATENT SPECIFICATION**

(45) Date of publication and mention of the grant of the patent:
**20.12.2017 Bulletin 2017/51**

(51) Int Cl.:
***G06K 9/00*** *(2006.01)*

(21) Application number: **12184823.8**

(22) Date of filing: **18.09.2012**

(54) **Road sign detecting method and road sign detecting apparatus**

Straßenschilderkennungsverfahren und Straßenschilderkennungsvorrichtung

Procédé de détection de panneau routier et appareil de détection de panneau routier

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2011 CN 201110300865**

(43) Date of publication of application:
**03.04.2013 Bulletin 2013/14**

(73) Proprietor: **Ricoh Company, Ltd.**
**Tokyo 143-8555 (JP)**

(72) Inventors:
• **Wang, Xiaomeng**
**100044 Beijing (CN)**
• **Liu, Liyan**
**100044 Beijing (CN)**
• **Pan, Pingping**
**100044 Beijing (CN)**

(74) Representative: **Schwabe - Sandmair - Marx**
**Patentanwälte Rechtsanwalt**
**Partnerschaft mbB**
**Joseph-Wild-Straße 20**
**81829 München (DE)**

(56) References cited:
• **SATURNINO MALDONADO-BASCON ET AL: "Road-Sign Detection and Recognition Based on Support Vector Machines", IEEE TRANSACTIONS ON INTELLIGENT TRANSPORTATION SYSTEMS, IEEE, PISCATAWAY, NJ, USA, vol. 8, no. 2, 4 June 2007 (2007-06-04), pages 264-278, XP011182707, ISSN: 1524-9050, DOI: 10.1109/TITS.2007.895311**

• **XIAOHONG GAO ET AL: "Colour Vision Model-Based Approach for Segmentation of Traffic Signs", EURASIP JOURNAL ON IMAGE AND VIDEO PROCESSING, vol. 13, no. 2, 13 December 2007 (2007-12-13), pages 349-7, XP055116478, ISSN: 1687-5176, DOI: 10.1109/34.730558**

• **GAO X W ET AL: "Recognition of traffic signs based on their colour and shape features extracted using human vision models", JOURNAL OF VISUAL COMMUNICATION AND IMAGE REPRESENTATION, ACADEMIC PRESS, INC, US, vol. 17, no. 4, 1 December 2005 (2005-12-01), pages 675-685, XP024905109, ISSN: 1047-3203, DOI: 10.1016/J.JVCIR.2005.10.003 [retrieved on 2006-08-01]**

• **JANSSEN R ET AL: "Hybrid Approach For Traffic Sign Recognition", INTELLIGENT VEHICLES '93 SYMPOSIUM TOKYO, JAPAN 14-16 JULY 1993, NEW YORK, NY, USA, IEEE, US, 14 July 1993 (1993-07-14), pages 390-395, XP010117326, ISBN: 978-0-7803-1370-5**

• **VITABILE S ET AL: "Road signs recognition using a dynamic pixel aggregation tecnhique in the HSV color space", IMAGE ANALYSIS AND PROCESSING, 2001. PROCEEDINGS. 11TH INTERNATIONAL C ONFERENCE ON SEPT.26-28, 2001, PISCATAWAY, NJ, USA, IEEE, 26 September 2001 (2001-09-26), pages 572-577, XP010561308, ISBN: 978-0-7695-1183-2**

EP 2 575 077 B1

- **MERVE CAN KUS ET AL: "Traffic sign recognition using Scale Invariant Feature Transform and color classification", COMPUTER AND INFORMATION SCIENCES, 2008. ISCIS '08. 23RD INTERNATIONAL SYMPOSIUM ON, IEEE, PISCATAWAY, NJ, USA, 27 October 2008 (2008-10-27), pages 1-6, XP031375423, ISBN: 978-1-4244-2880-9**

**Description**

BACKGROUND OF THE INVENTION

1. Field of the Invention

The present invention relates to a road sign detecting method and a road sign detecting apparatus.

2. Description of the Related Art

As development is continuing on an intelligent transportation system (ITS), and the intelligent transportation system has been widely used, research on a road sign detecting technology has gradually garnered attention. Since standards of road signs adopted by various countries in the world are basically the same, a road sign detecting technology developed with regard to standard road signs of one country may be applied in other countries without any modifications or only with slight adjustments. As a result, this kind of road sign detecting technology has universal applicability.

Up to now, a certain amount of development has been carried out in the field of road sign detection; for example, many patents or patent applications have been made.

In the following cited Reference No. 1 entitled as "Road Sign Determination Apparatus, Method, And Program", a road sign determination apparatus is proposed. The road sign determination apparatus comprises an image recognition unit configured to utilize a template so as to perform recognition with regard to image data including a road sign; and a determination unit configured to make a decision based on the road sign included in the image data on the grounds of the recognition result. The template is a basic template formed by a circular road sign frame and an arrow indicating a direction. However, the road sign determination apparatus in this reference is used to carry out recognition only with regard to a road sign like "NO LEFT TURN"; in other words, the road sign determination apparatus may not be applied to recognition of all road signs. In addition, the template is formed only by a fixed circular outline and an inner arrow.

In the following cited Reference No. 2 entitled as "Method And Device For Automatically Recognizing Road Sign In Video Image, And Storage Medium Which Stores Program Of Road Sign Recognition", a road sign detecting technique is proposed. In this reference, a specific region where a road sign may probably appears, in a video image is defined, and then pixel color component detection is conducted with regard to image data in a HSV (Hue, Saturation, and Value) color space, converted from the original video image. However, in this reference, only the specific region where the road sign may possibly exist is defined, and after the original video image is converted into the HSV color space, a color threshold range for executing a filtering process is a fixed one. As a result, the accuracy of the result obtained by the filtering process may be influenced by environmental lighting. Furthermore only shape information is employed to accomplish the follow-on recognition of the road sign, thereby being likely to increase the misdetection rate.

In the following cited Reference No. 3 titles as "A Traffic Sign Detection Method", a concept of a pair formed by a color and a shape of a standard road sign is proposed by analyzing the basic color information and the geometric shape information of the standard road sign. In this reference, three types of standard road signs used in China are classified into subclasses corresponding to seven pairs of colors and shapes; in this way, the complexity of a detection system proposed in this reference may be lowered. However, a threshold value used for performing the color division in this reference is a fixed one too; consequently the accuracy of the color division result may inevitably be affected by the environmental lighting. At the same time, the classification of the pairs of colors and shapes is only based on the outer outline features of the standard road signs, and the inner features of the standard road signs, such as inner colors or the like, are not related to the classification. This kind of classification is rough, and may result in a relatively high misdetection rate.

Moreover, in each of the above related references, an image dividing approach based on a color filtering process in the road sign detection is not self-adaptive. Although a concept of rough classification is mentioned in one of the related references, it is just in the light of a clear and fixed template built from a limited standard road sign set, or is just a concept of a pair of a color and a shape; to put it another way, the inner features of the standard road signs are not utilized to carry out further road sign recognition.

> Cited Reference No. 1: US Patent Application Publication No. 2008/0002891 A1
> Cited Reference No. 2: Japan Patent Application Publication No. 2009/217832 A
> Cited Reference No. 3: Chinese Patent Application Publication No. 1014702197 A

SATURNINO MALDONADO-BASCON ET AL: "Road-Sign Detection and Recognition Based on Support Vector Machines" IEEE TRANSACTIONS ON INTELLIGENT TRANSPORTATION SYSTEMS, IEEE, PISCATAWAY, NJ, USA, vol. 8, no. 2, 4 June 2007 (2007-06-04), pages 264-278, XP011182707, ISSN: 1524-9050, DOI:10.1109/TITS.2007.895311 discloses a method of automatic road-sign detection and recognition based on support vector machines (SVMs).

XIAOHONG GAO ET AL: "Colour Vision Model-Based Approach for Segmentation of Traffic Signs", EUASIP JOURNAL ON IMAGE AND VIDEO PROCESSING, vol. 13, no. 2, 13 December 2007 (2007-12-13), pages 349-7, XP055116478, ISSN: 1687-5176, DOI: 10.1109/34.730558 discloses an approach to segmenting traffic signs from the rest of a scene via a colour appearance model.

SUMMARY OF THE INVENTION

The present invention seeks to solve the above described problems in the prior art. In embodiments of the present invention, a road sign detecting method and a road sign detecting apparatus are provided. The present invention is defined by the independent claims. The dependent claims relate to preferred embodiments.

The embodiments of the present invention belong to the field of object detection and recognition. According to the embodiments, it is possible to achieve driving assistance on the grounds of off-line road sign maintenance and real-time road sign detection based on fuzzy recognition.

According to one aspect of the present invention, there is provided a method of detecting at least one road sign in an image waiting for processing. The method comprises a scene modeling step of determining, based on sample images in each of plural scenes, pass ranges of plural colors in each of the plural scenes; a color filtering step of determining a scene to which the image waiting for processing belongs, and then carrying out, by utilizing the pass ranges of the plural colors corresponding to the determined scene, color filtering with regard to the image waiting for processing so as to acquire binary images with regard to respective colors of the image waiting for processing; a geometric feature filtering step of performing connected domain analysis with regard to the binary images so as to obtain geometric features of connected domains in each of the binary images, and then, for each of the binary images, removing at least one connected domain not coinciding with predetermined standard road sign specifications, and letting at least one remaining connected domain be a candidate road sign; a shape detecting step of detecting a shape of the candidate road sign according to a limited number of predetermined shapes; and a recognition step of recognizing, based on a degree of similarity between an inner feature of the candidate road sign and each of standard inner features of plural standard road signs having different attributes, an attribute of the candidate road sign.

According to one aspect of the present invention, there is provided an apparatus of detecting at least one road sign in an image waiting for processing. The apparatus comprises a scene modeling device configured to determine, based on sample images in each of plural scenes, pass ranges of plural colors in each of the plural scenes; a color filtering device configured to determine a scene to which the image waiting for processing belongs, and then to carry out, by utilizing the pass ranges of the plural colors corresponding to the determined scene, color filtering with regard to the image waiting for processing so as to acquire binary images with regard to respective colors of the image waiting for processing; a geometric feature filtering device configured to perform connected domain analysis with regard to the binary images so as to obtain geometric features of connected domains in each of the binary images, and then, for each of the binary images, to remove at least one connected domain not coinciding with predetermined standard road sign specifications, and to let at least one remaining connected domain be a candidate road sign; a shape detecting device configured to detect a shape of the candidate road sign according to a limited number of predetermined shapes; and a recognition device configured to recognize, based on a degree of similarity between an inner feature of the candidate road sign and each of standard inner features of plural standard road signs having different attributes, an attribute of the candidate road sign.

In the embodiments of the present invention, a more effective and robust color filtering approach is employed, and image division is carried out in a manner of binarization. In general, a standard road sign has specific color and shape information. The color information is utilized to conduct first-step image division, and since compared to a RGB (Red, Green, and Blue) color space, a HSV color space is less sensitive to light, in order to acquire a better effect, the HSV color space is adopted in the first-step image division. In different scenes having different lighting conditions, different pass ranges (i.e., threshold ranges) are set for a same color; in this way, it is possible to accomplish more effective and robust image division.

Also, in the embodiments of the present invention, inner features of a standard road sign and a candidate road sign are extracted for performing fuzzy matching so as to ensure a relatively high detection rate, i.e., to effectively decrease the misdetection rate. By adopting a fuzzy recognition mechanism, once it is determined that a candidate road sign belongs to a roughly classified class, the candidate road sign may be output at once. However, in a conventional template matching process in which a candidate road sign is accurately matched with multiple standard road signs so as to determine an accurate meaning of the candidate road sign (this matching is also called "one-to-multiple template matching"), once misrecognition occurs, it may provide a misleading message to a driver, and then may result in an accident occurrence. The fuzzy matching used in the embodiments of the present invention effectively utilizes the inner features of the standard road sign and the candidate road sign so as to increase the detection rate; in this way, it is possible to achieve an effective balance between the road sign detection and the road sign recognition. On the other hand, the means for detecting a road sign in the embodiments of the present invention is not limited to recognition and detection of a specific road sign (for example, a "NOT LEFT TURN" road sign); in other words, the means for detecting the road sign may be applied to recognition and detection of all or nearly all the road signs in a country.

Compared to the one-to-multiple template matching technique, the road sign detecting technique in the embodiments of the present invention may more effectively reduce the calculation complexity, thereby being able to increase the execution speed. Additionally, the number of the roughly classified classes is much less than the number of templates used in the one-to-multiple template matching; as a result, the road sign detecting technique in the embodiments of the present invention may dramatically reduce the matching time, and may satisfy a demand of real time processing in actual use.

BRIEF DESCRIPTION OF THE DRAWINGS

FIG. 1 illustrates an example of an applicational environment of a driving assistant system able to utilize a road sign detecting method and a road sign detecting apparatus according to embodiments of the present invention;
FIG. 2 is an overall flowchart of a road sign detecting method according to a first embodiment of the present invention;
FIG. 3 is a flowchart of a scene modeling step in the road sign detecting method according to the first embodiment of the present invention;
FIG. 4A illustrates an example of a sample image including a standard road sign, captured in the daytime (i.e., having a daytime scene);
FIG. 4B illustrates an example of a sample image including a standard road sign, captured in the night (i.e., having a night scene);
FIG. 5 illustrates an example of a histogram of the hue and saturation components of red color vectors of a sample image in a HSV color space, after being processed by a hue and saturation distribution determining step in the first embodiment of the present invention;
FIG. 6 is a flowchart of a color filtering step in the road sign detecting method according to the first embodiment of the present invention;
FIG. 7A illustrates an example of an image waiting for processing in the first embodiment of the present invention;
FIG. 7B illustrates an example of a result of carrying out binarization-based image division with regard to the red color of the image waiting for processing shown in FIG. 7A;
FIG. 8 illustrates an example of a result of performing classification with regard to standard road signs in the first embodiment of the present invention;
FIG. 9 is a flowchart of a recognition step in the road sign detecting method according to the first embodiment of the present invention; and
FIG. 10 is an overall block diagram of a road sign detecting apparatus according to a second embodiment of the present invention.

DETAILED DESCRIPTION OF THE PREFERRED EMBODIMENTS

Hereinafter, embodiments of the present invention will be concretely described with reference to the drawings. However it should be noted that the same symbols, which are in the specification and the drawings, stand for constructional elements having basically the same function and structure, and repeated explanations for the constructional elements are omitted.

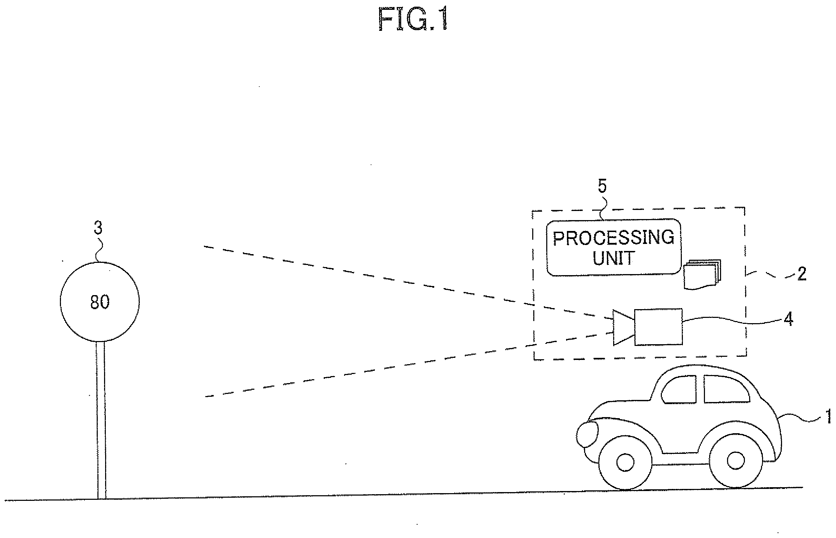

FIG. 1 illustrates an example of an applicational environment of a driving assistant system able to utilize a road sign detecting method and a road sign detecting apparatus according to the embodiments of the present invention.

As shown in FIG. 1, the driving assistant system 2 may be installed in a vehicle 1, and includes a camera 4 and a processing unit 5. The camera 4 may be mounted in the vehicle 1, and is used to acquire an image of a current environment in real time. The processing unit 5 is used to carry out road sign detection with regard to the acquired image. If a road sign 3 is detected, then it is classified roughly, i.e., the attribute of the road sign 3 is recognized, and the recognized attribute of the road sign 3 is reported to a driver by utilizing a proper warning means such as outputting audio and video.

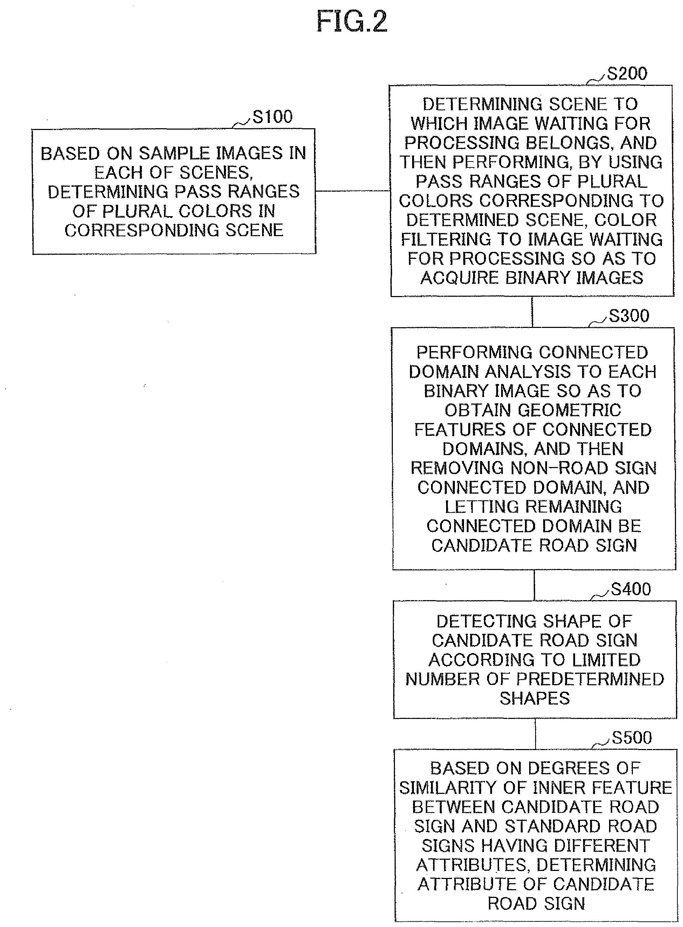

In what follows, a road sign detecting method according to a first embodiment of the present invention is concretely illustrated by referring to FIGS. 2 to 9.

FIG. 2 is an overall flowchart of a road sign detecting method according to a first embodiment of the present invention.

The road sign detecting method in the first embodiment is a method of conducting road sign detection according to both self-adaptive color filtering and fuzzy recognition based on rough classification (i.e., the classification is performed on the grounds of the attributes of standard road signs). The road sign detecting method may mainly include off-line scene modeling and road sign attribute modeling as well as on-line road sign detection and recognition. In general, the off-line process (i.e., the scene modeling and the road sign attribute modeling) belongs to preparatory work done for the on-line process (i.e., the road sign detection and recognition), and the on-line process may provide the real-time result of the road sign detection and recognition to a driver.

As shown in FIG. 2, the road sign detecting method in the first embodiment may include:

a scene modeling step S100 of determining, based on sample images in each plural scenes, pass ranges (i.e., threshold ranges) of plural colors in each of the plural scenes;

a color filtering step S200 of determining a scene to which an image waiting for processing belongs, and then carrying out, by utilizing the pass ranges of the plural colors corresponding to the determined scene, color filtering with regard to the image waiting for processing so as to acquire binary images with regard to respective colors of the image waiting for processing;

a geometric feature filtering step S300 of performing connected domain analysis with regard to the acquired binary images so as to obtain geometric features of respective connected domains in each of the binary images, and then, for each of the binary images, removing at least one connected domain not coinciding with predetermined standard road sign specifications, and letting at least one remaining connected domain be a candidate road sign;

a shape detecting step S400 of detecting the shape of the obtained candidate road sign according to a limited number of predetermined shapes; and

a recognition step S500 of recognizing, based on a degree of similarity between the inner feature of the candidate road sign and each of the inner features of plural standard road signs having different attributes (here, each of the inner features of plural standard road signs having different attributes indicates each of the inner features of plural standard road signs in each of subclasses having different attributes, as described below), the attribute of the candidate road sign.

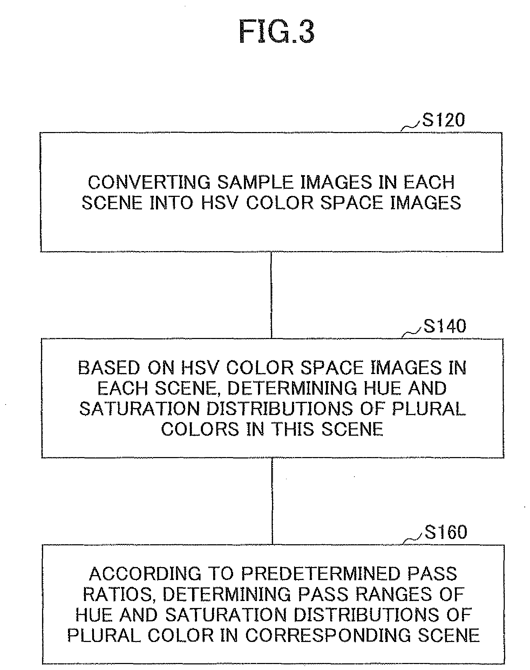

In what follows, the scene modeling step S100 is concretely illustrated by referring to FIG. 3.

FIG. 3 is a flowchart of the scene modeling step S100 in the road sign detecting method according to the first embodiment of the present invention.

The scene modeling step S100 belongs to the above mentioned "off-line" process. Creation of the plural scenes may be helpful for carrying out more effective color division in a binary manner, and a well-done color division will play a very important role in the follow-on road sign detection and recognition.

As shown in FIG. 3, the scene modeling step S100 may concretely include:

a first color space converting step S120 of converting the sample images in each of the plural scenes into HSV color space images;

a hue and saturation distribution determining step S140 of determining, based on the converted sample images (i.e., the HSV color space images) in each of the plural scenes, the hue and saturation distributions of the plural colors in the corresponding scene; and

a pass range determining step S160 of determining, according to predetermined pass ratios, pass ranges corresponding to the hue and saturation distributions of the plural colors in the corresponding scene.

In particular, in the first color space converting step S120, first weather and lighting conditions are utilized to obtain the plural scenes; for example, the plural scenes may include a daytime scene, a night scene, a foggy scene, a rainy scene, a snowy scene, and the like.

In this way, a set $Category_{scene}$ of the plural scenes (also called a "scene set $Category_{scene}$") is created as shown in the following equation (1).

$$Category_{scene} = \{S_0, S_1, S_2, S_3, \cdots\} \qquad (1)$$

Here $S_i$ refers to a scene, and may be extendable. $i$ is an index, and is a natural number.

Also a set $Color_{sign}$ of colors commonly used in the standard road signs (also called a "color set $Color_{sign}$") is created as shown in the following equation (2).

$$Color_{sign} = \{C_0, C_1, C_2, C_3, \cdots\} \qquad (2)$$

Here $C_i$ refers to a color (i.e., a standard road sign color) in common use, and may be extendable. $i$ is an index, and is a natural number.

In general, as for each country in the world, the colors included in its standard road sign models are fixed, and the number of the colors is limited. Here it should be noted that since the road sign detecting method in the first embodiment of the present invention needs to carry out detection at least with regard to the outer outline color of a candidate road sign, the color set $Color_{sign}$ should include at least the outer outline colors of the standard road signs of the corresponding country, for example, a red color, a blue color, and a yellow color. In addition, this color set may further include an inner color of the standard road signs in the corresponding country, for example, a green color.

Although the colors in common use are fixed, and the number of elements in the color set is limited, the colors of a same standard road sign included in different sample images may vary due to the influence of weather or lighting. In other words, the same standard road sign may represent different colors in different scenes. As a result, it is necessary to acquire plural sample images including the colors set in the color set $Color_{sign}$, belonging to each of the scenes defined in the scene set $Category_{scene}$ so as to carry out the processing of the first color space converting step S120.

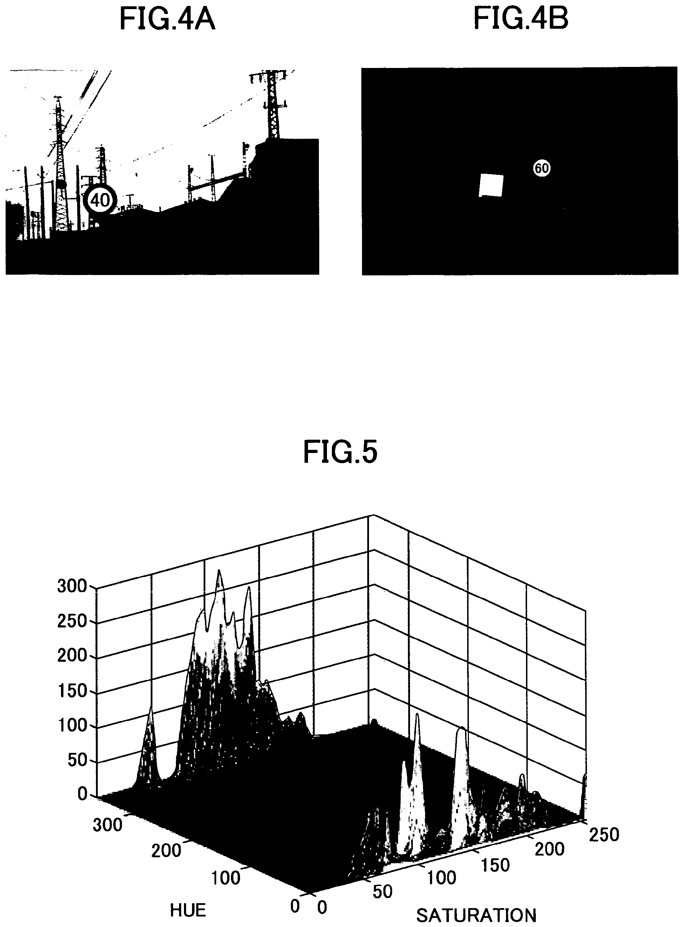

These kinds of sample images are those whose scenes and standard road signs are given. For example, FIGS. 4A and 4B illustrate two examples of sample images, respectively. FIG. 4A illustrates an example of a sample image including a standard road sign, captured in the daytime (i.e., having a daytime scene). FIG. 4B illustrates an example of a sample image including a standard road sign, captured in the night (i.e., having a night scene).

Here it should be noted that those people skilled in the art may understand that the processing up to here (i.e., the processing of acquiring the sample images in each of the plural scenes) may be executed as pre-processing (for example, carried out by a manual operation, etc.). As a result, this processing may be performed out of the first color space converting step S120, or to put it another way, this processing may be performed independently, i.e., as long as the result of this processing may be adopted by the first color space converting step S120, it is okay.

In the first color space converting step S120, for each of the scenes defined in the scene set $Category_{scene}$, enough sample images (for example, RGB images) with regard to the respective standard road signs in the corresponding scene are used for carrying out training.

The sample images are converted into the HSV color space images, and the conversion may be conducted by utilizing a proper conventional approach. Here it should be noted that the HSV color space refers to a color space of hue, saturation, and value.

Next, in the hue and saturation distribution determining step S140, it is possible to extract the outer outline of the standard road sign in each of the converted sample images (i.e., the HSV color space images) so as to create a histogram of the hue and saturation components of the extracted portion (the outer outline). Since each sample image is given, and other portions except the outer outline of the standard road sign in the corresponding sample image are not of concern in this stage, sometimes the histogram of the hue and saturation components of the outer outline of the standard road sign is also called a "sample image histogram" hereinafter.

Here it is supposed that the color set $Color_{sign}$ has three of outer outline colors, namely a red color, a blue color, and a yellow color. In addition, actually the outer outline of a standard road sign has only one color in general. As a result, it is possible to obtain, from a sample image histogram corresponding to each of the three outer outline colors, the hue and saturation distributions of the corresponding outer outline color. For example, if the outer outline color of a standard road sign in a sample image is given, for instance, a red color, then it is possible to obtain distributions of the hue and saturation components of the red color vectors from the sample image.

FIG. 5 illustrates an example of a histogram of the hue and saturation components of the red color vectors of a sample image in the HSV color space, after being processed by the hue and saturation distribution determining step S140.

As for the standard road signs in the respective scenes, enough sample image histograms may be created by the hue and saturation distribution determining step S140. After that, since the created sample image histograms represent distributions of the hue and saturation components of the standard road sign colors defined in the color set $Color_{sign}$, in the pass range determining step S160, it is possible to extract (determine), as for each of the standard road sign colors (here, mainly referring to the outer outline colors) in each of the scenes, the pass ranges of the hue and saturation components of the corresponding standard road sign color. As a result, each of the pass ranges determined in this way may have relatively strong self-adaptivity. Here it should be noted that each of the pass ranges refers to a range between a high threshold value and a low threshold value.

Particularly, in the pass range determining step S160, as for each of the standard road sign colors in each of the scenes, for example, it is possible to determine the pass ranges of the hue and saturation components of the corresponding standard road sign color by adopting the following processing.

Here it is supposed that a scene $S_p$ belongs to $Category_{scene}$, i.e., $S_p \in Category_{scene}$, and in the scene $S_p$, a standard road sign color $C_p$ belongs to $Color_{sign}$, i.e., $C_p \in Color_{sign}$, wherein, $p$ and $q$ are indexes, and are natural numbers, respectively. On the grounds of this, sample images (here, referring to outer outline portions) with regard to the standard road sign color $C_p$ in the scene $S_p$ may be acquired. Furthermore, if a hue level range is $0 \sim W$, and a

saturation level range is 0 ~ $W$ (for example, $W$ may be 255, or may be another value), then a hue distribution in the hue level range and a saturation distribution in the saturation level range, of all the pixels of all the sample images may be calculated.

As for all the outer outline portions (all the sample images) with regard to the standard road sign color $C_p$ in the scene $S_p$, according to the hue and saturation distributions of the standard road sign color $C_p$, a probability accumulation $T(h_k)$ in a certain range within the hue level range 0 ~ $W$ and a probability accumulation $P(S_k)$ in a certain range within the saturation level range 0 ~ $W$ may be respectively obtained by utilizing, for example, a counter. Here $W$ is 255, i.e., $W = 255$.

$$T(h_k) = \sum_{k=i}^{j} (h_k / N) \quad (0 \le i < j \le 255) \qquad (3)$$

$$P(S_k) = \sum_{k=i}^{j} (S_k / N) \quad (0 \le i < j \le 255) \qquad (4)$$

Here $h_k / N$ refers to a ratio of the number of the pixels of each of 0 ~ $k$ hue levels to the total number of pixels, and $S_k / N$ refers to a ratio of the number of the pixels of each of 0 ~ $k$ saturation levels to the total number of pixels.

On the basis of the equations (3) and (4), a hue pass range and a saturation pass range may be obtained by adopting the following equations (5) and (6), respectively.

$$[Hue_L, Hue_H] = selectH(T(h_k), thr1) \qquad (5)$$

$$[Saturation_L, Saturation_H] = selectS(P(S_k), thr2) \qquad (6)$$

Here the function *selectH* indicates that an important hue range is acquired by utilizing $T(h_k)$, and then serves as the hue pass range [$Hue_L$, $Hue_H$]. An approach of acquiring the important hue range is taking a continuous hue range whose $T(h_k)$ is greater than a predetermined threshold value *thr*1, for example, 90%.

Similarly, the function *selectS* indicates that an important saturation range is acquired by utilizing $P(S_k)$, and then serves as the saturation pass range [$Saturation_L$, $Saturation_H$]. An approach of acquiring the important saturation range is taking a continuous saturation range whose $P(S_k)$ is greater than a predetermined threshold value *thr*2, for example, 90%.

Here it should be noted that the function *selectH* is a self-defined function for acquiring the important hue range. The function *selectH* may be concretely embodied as follows:

$$length=255;$$

$$For\ i=0\ to\ 255$$

$$\{$$

$$For\ j=i+1\ to\ 255$$

$$\{$$

$$If(\sum_{k=i}^{j} h_k / N) = t\ \&\ (j-i)<length),$$

$$Length=j-i;$$

$$\}$$

$$Output\ (i,j);$$

$$\}$$

Here *length* refers to a length of a continuous hue range, and its value is 255. If $\sum_{k=i}^{j} h_k / N$ is equal to *t* (here *t* is *thr*1, for example, 90%), and the length of the current hue range is minimum, then the start point *i* and the end point *j* of the current hue range are output to serve as $Hue_L$ and $Hue_H$, respectively, i.e., $Hue_L = i$, and $Hue_H = j$.

Analogously, by using the function *selectS* similar to the embodied *selectH*, it is possible to output a start point and an end point of a continuous saturation range to serve as $Saturation_L$ and $Saturation_H$.

In this way, the hue pass range and the saturation pass range with regard to the standard road sign color $C_p$ in the scene $S_p$, i.e., [$Hue_L$, $Hue_H$] and [$Saturation_L$,$Saturation_H$] may be obtained, respectively.

Here it should be noted that those people skilled in the art may understand that an approach of acquiring, according to plural scenes created on the basis of different lighting conditions, a pass range with regard to each standard road sign color in each of the plural scenes is more self-adaptive than an approach of creating a fixed threshold range for each standard road sign color without taking into account various scenes.

After the hue pass range [$Hue_L$,$Hue_H$] and the saturation pass range [$Saturation_L$, $Saturation_H$] of each of the standard road sign colors in each of the scenes are created off line, the processing of the scene modeling step S100 ends.

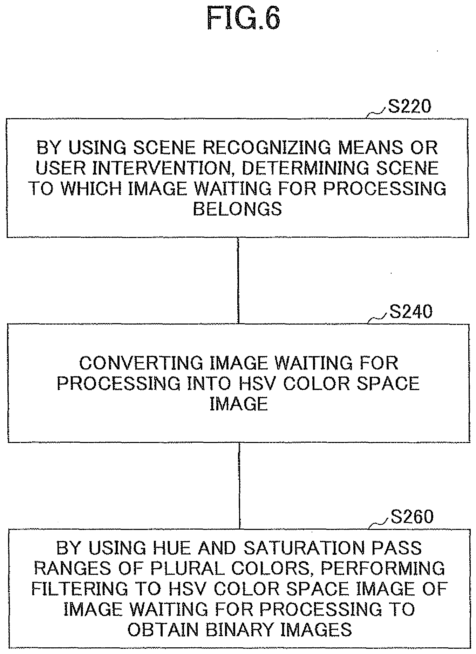

In what follows, the color filtering step S200 is concretely illustrated by referring to FIG. 6.

FIG. 6 is a flowchart of the color filtering step S200 in the road sign detecting method according to the first embodiment of the present invention.

In the color filtering step 200, color filtering is carried out with regard to a real-time image captured by, for example, a vehicle-mounted camera. The real-time image serves as an image waiting for processing.

As shown in FIG. 6, the color filtering step S200 may include:

a scene determining step S220 of determining a scene to which the image waiting for processing belongs by utilizing a scene recognizing means or user intervention;
a second color space converting step S240 of converting the image waiting for processing into a HSV color space image; and
a binarization step S260 of performing, by utilizing the hue and saturation pass ranges of the plural colors corresponding to the determined scene, filtering with regard to the HSV color space image of the image waiting for processing so as to obtain binary images with regard to the respective colors of the image waiting for processing.

Here it should be noted that in the scene determining step S220, the scene recognizing means may adopt an automatic scene recognition technique well used in the field of cameras or the like, and the user intervention may be a way of manually determining a current scene as a person does when he uses a camera or the like (for example, a driver may set the current scene when his vehicle is stopped).

The second color space converting step S240 may adopt processing analogous to that of the first color space converting step S 120 so as to convert the image waiting for processing (usually, a RGB image), captured by the vehicle-mounted camera into the HSV color space image.

After that, image division is carried out by utilizing the binarization step S260. In particular, for each of the colors in the converted image (i.e., the HSV color space image), only when the hue and saturation values of a pixel in the converted image are respectively within the hue and saturation pass ranges of the corresponding one of the plural colors in the determined scene, the pixel is given a high value (for example, 1); otherwise a low value (for example, 0). In this way, a binary image with regard to the corresponding color, of the converted image is obtained. In other words, the filtering is performed on each pixel of the converted image. When the hue value of the corresponding pixel is within the hue pass range [$Hue_L$, $Hue_H$] of a standard road sign color (such as a red color, a blue color, or the like commonly used) belonging to the scene determined in the scene determining step S220, and the saturation value of the same pixel is within the saturation pass range [$Saturation_L$, $Saturation_H$] of the same standard road sign color belonging to the same scene, this pixel is given, for example, 1; otherwise, for example, 0. In this way, binary images corresponding to the colors of the converted image may be acquired.

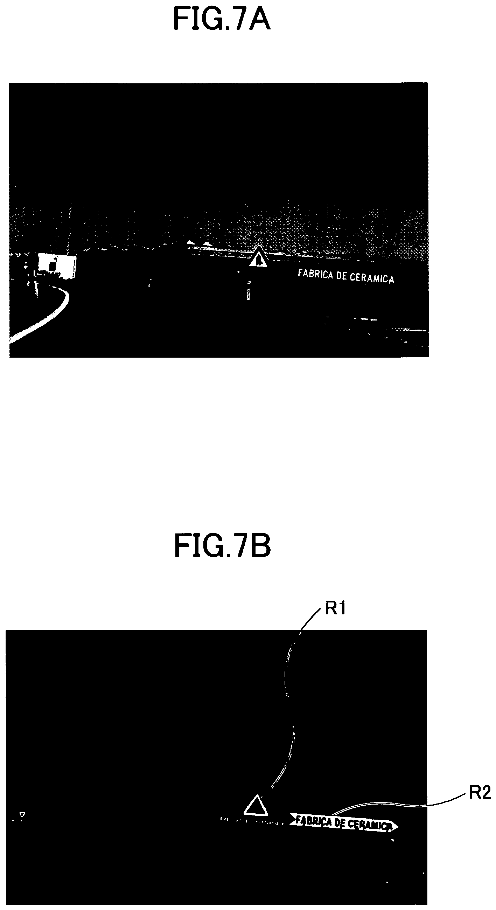

For example, FIG. 7A illustrates an example of an image waiting for processing. FIG. 7B illustrates an example of a result of carrying out the binarization-based image division with regard to the red color of the image waiting for processing shown in FIG. 7A, wherein, the regions R1 and R2 refer to red color regions passed through the filtering, respectively.

In what follows, the geometric feature filtering step S300 is concretely illustrated.

In the geometric feature filtering step S300, the connected domain analysis is conducted with regard to each of the binary images. It is possible to adopt a well-used connected domain analysis approach in the conventional techniques so as to acquire at least one connected domain and its geometric feature in each of the binary images. As for the acquired connected domain, it is possible to extract its outer outline by utilizing an outline extracting approach commonly used, since standard road signs prescribed in a country coincide with certain specifications, and have standard and fixed shapes. In other words, the geometric feature of the outer outline of each of the standard road signs is fixed, for example, a size or an aspect ratio. As a result, by using this kind of information, it is possible to remove the acquired connected domain if its geometric feature does not meet the certain specifications obviously; otherwise the acquired connected domain is retained to serve as a candidate road sign.

For example, when the binary image shown in FIG. 7B is taken as an instance, in the geometric feature filtering step S300, it is possible to remove the region R2, and to retain the region R1 coinciding with the certain specifications to serve as a candidate road sign by utilizing a well-known approach in the art.

In what follows, the shape detecting step S400 is concretely illustrated.

In the shape detecting step S400, it is possible to detect the shape of the candidate road sign acquired in the geometric feature filtering step S300 according to a limited number of predetermined shapes. The predetermined shapes may be a circle, a triangle, and a rectangle in general, for nearly all countries adopt these three shapes to design their standard road signs. The shape detecting approach used in the shape detecting step S400 may be an approach based on image processing, for example, the Hough transform algorithm for detecting shapes, or may be an off-line training and on-line prediction approach based on machine learning. In a word, it is possible to adopt any proper shape detection approach in the conventional techniques to detect the shape of the candidate road sign. Up to here, it is possible to detect the color and shape of the outer outline of the candidate road sign included in the image waiting for processing.

Since standard road signs in a country are made according to certain specifications and standards in general, some standard road signs having the same outer outline colors may have similar features, and some standard road signs having both the same outer outline colors and different shapes may have further similar features. As a result, by utilizing the processing of the first embodiment up to here, it is possible to roughly determine the meaning of the candidate road sign, and to provide useful information to a user (a driver). In other words, the first embodiment of the present invention may finish here. However, of course, in this embodiment, it is also possible to further carry out recognition with regard to the candidate road sign so as to concretely determine the specific meaning of the candidate road sign, for some standard road signs having both the same outer outline colors and the same shapes may have different attributes.

In this circumstance, it is possible to further take into account the inner features of the standard road signs and the candidate road sign. By using these kinds of inner features, it is possible to further perform rough classification with regard to some standard road signs having both the same outer outline colors and the same shapes, thereby being able to get a higher detection and recognition rate and to provide attribute information for the real-time road sign recognition.

As a result, in the road sign detecting method according to the first embodiment of the present invention, it is also possible to classify sample road signs (for example, the standard road signs in a country) into large classes according to the outer outline colors of the sample road signs; then, for each of the large classes, to classify its members into small classes according to the shapes of its members; and then, for each of the small classes, to extract the inner features of its members, and according to the extracted inner features of its members, to further classify its members into subclasses corresponding to different attributes. This classification step may be finished off line before carrying out the real time road sign detection and recognition. Furthermore, similar to the above described off-line scene modeling step S100, the process of determining the inner features of the sample road signs having different attributes is also based on the various sample road signs.

In particular, for each of the above described small classes (i.e., the outer outline color and the shape of the corresponding small class has been determined), first an inner feature set $Set(FeatureInner)$ of inner features $F_i (i = 1,\cdots,n)$ of $n$ sample road signs in the corresponding small class is defined as the following equation (7).

$$F_1, F_2, \cdots, F_n \in Set(FeatureInner) \qquad (7)$$

Next, as for each of the sample road signs $Sign_i (i = 1,\cdots, n)$ in the corresponding small class, its feature is extracted as the following equation (8) according to the defined inner feature set.

$$extractFeature(Sign_i) = \{F_i \in Set(FeatureInner) \mid F_i = (a1, a2, \cdots, am)\} \qquad (9)$$

Here $a1, a2, \cdots, am$ stand for $m$ components of the inner feature $F_i$.

After that, a few sample road signs in the corresponding small class having the same or similar features are grouped (roughly classified) as a subclass $TSR_i$. In this way, a subclass set $Set(TSR)$ of subclasses belonging to the corresponding small class may be established as the following equation (10).

$$Set(TSR) = \{TSR_i \mid TSR_i = \{Sign_1, Sign_2, \cdots, Sign_k\}\} \qquad (10)$$

Here the subclass $TSR_i$ includes $k$ sample road signs $Sign_j (j = 1, \cdots, k)$.

Here it should be noted that the sample road signs in a subclass have standard inner features corresponding to the attribute which the subclass has, i.e., which the sample road signs in the subclass have.

After the standard inner features of all of the sample road signs having various attributes are determined, it is possible to recognize the attribute of the image waiting for processing by the recognition step S500.

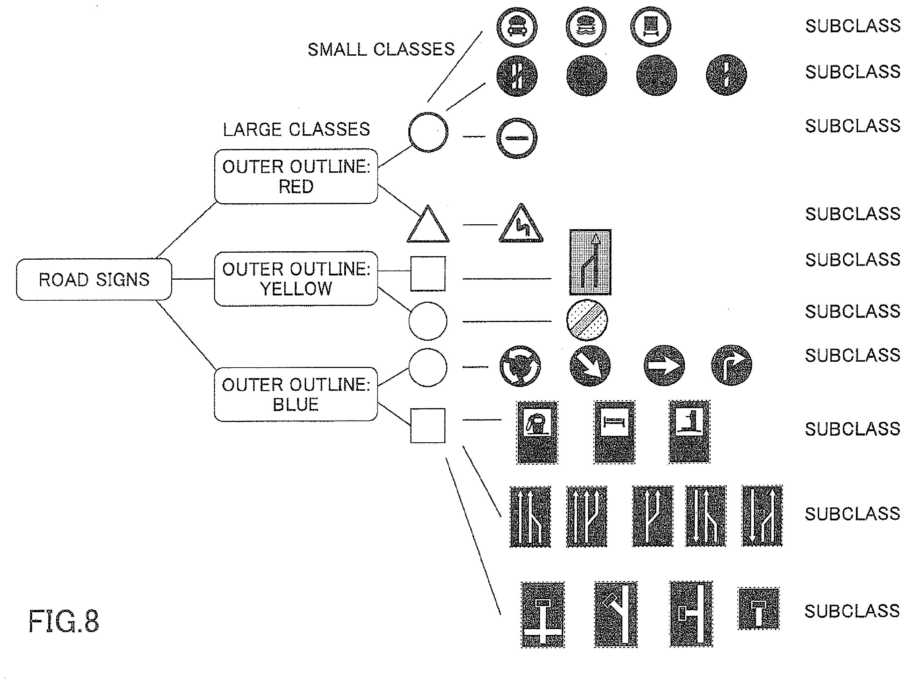

FIG. 8 illustrates an example of a result of performing classification with regard to the standard road signs in a country.

As shown in FIG.8, first the standard road signs are classified into large classes (for example, a large class of red color, a large class of yellow color, or a large class of blue color) on the basis of outer outline colors of the standard road signs; then, for each of the large classes, its members are classified into small classes (for example, a small class of circles, a small class of triangles, or a small class of rectangles) on the basis of the shapes of its members; and then, for each of the small classes, its members are classified into subclasses on the basis of the inner features of its members. Here it should be noted that as shown in FIG. 8, some small classes may have plural subclasses, but some small classes may only have one subclass. It is possible to classify the detected candidate road sign into a subclass having an attribute that is the same with that of the detected candidate road sign, by adopting the recognition step S500. Members in each subclass have the similar meanings, thereby being able to notify a driver.

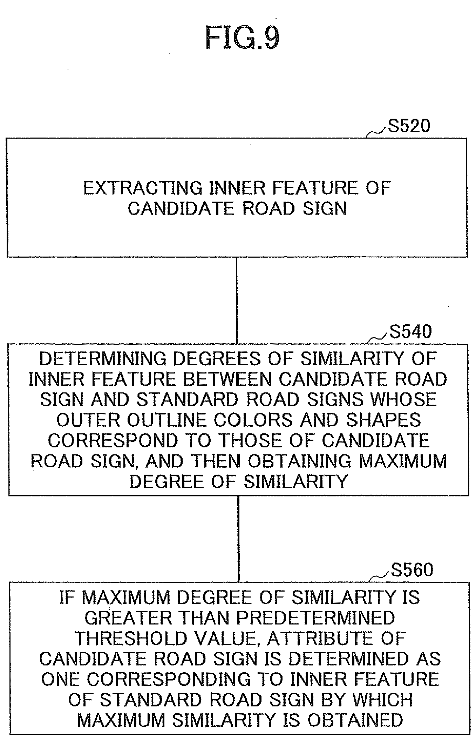

In what follows, the recognition step S500 is concretely illustrated by referring to FIG. 9.

FIG. 9 is a flowchart of the recognition step S500 in the road sign detecting method according to the first embodiment of the present invention.

As shown in FIG. 9, the recognition step S500 may include:

an extraction step S520 of extracting the inner feature of the candidate road sign whose outer outline color and shape has been determined;

a degree-of-similarity determining step S540 of determining a degree of similarity between the inner feature of the candidate road sign and each of the standard inner features of the standard road signs corresponding to the outer outline color and shape of the candidate road sign, having various attributes, and then obtaining the maximum degree of similarity; and

an attribute determining step S560 of determining, in a case where the obtained maximum degree of similarity is greater than a predetermined threshold value, that the candidate road sign has the attribute corresponding to the standard inner feature of the standard road sign by which the maximum similarity is obtained.

In particular, in the extraction step S520, the inner feature $Fcandidate$ of the candidate road sign $candidate$ (whose outer outline color and shape have been determined, i.e., a small class to which the candidate road sign belongs has been determined) is extracted according to a predetermined definition of inner features, as shown in the following equation (11).

$$extractFea \, ture(candidate) = \{Fcandidate \mid Fcandidate = (a1, a2, \cdots, an)\} \qquad (11)$$

Here $a1, a2, \cdots, an$ stand for $n$ components of the inner feature $Fcandidate$.

In the degree-of-similarity determining step S540, the degree of similarity $similarity(Fcandidate, TSR_i)$ between the inner feature of the candidate road sign and each of the standard inner features of the standard road signs in the respective subclasses $TSR_i$ belonging to the small class is calculated, and then the maximum degree of similarity $Max\_similarity = similarity(Fcandidate, TSR_i)$ is obtained. Here it is supposed that the obtained maximum degree of similarity corresponds to the $j$ - $th$ subclass.

In the attribute determining step S560, if the obtained maximum degree of similarity is greater than a predetermined threshold value $threshold$, then it is determined that the candidate road sign belongs to the corresponding subclass (the $j$ - $th$ subclass), i.e., if $Max\_similarity > threshold$, then $candidate \in TSR_j$; otherwise, it may be determined that the candidate road sign is not a real road sign.

Here it should be noted that the above mentioned standard inner feature of the standard road sign and the inner feature of the candidate road sign may be inner color features inside the outer outlines of the standard road sign and the candidate road sign, respectively.

In this circumstance, first an inner color set $InnerColor$ of inner colors probably existing in the standard road signs is defined as shown in the following equation (12).

$$InnerColor = \{c1, c2, c3, c4, c5, c6\} \qquad (12)$$

Analogous to the outer outline features, the number of the inner colors in the standard road signs is limited too. Here it is supposed that there are six inner colors, namely, c1, c2, c3, c4, c5, and c6.

Next, in a small class of standard road signs whose outer outlines and shapes have been determined, a subclass set *Set(TSR)* is created based on the same inner color features, as shown in the following equation (13).

$$Set(TSR) = \{TSR_i \mid extractInnerColor(TSR_i)\} \qquad (13)$$

The subclass set *Set(TSR)* includes a limited number of subclasses $TSR_i$ according to a limited number of combinations of the inner colors in the small class. Here *i* is an index, and is a natural number.

Moreover, the function *extractInnerColor* in the above equation (13) is used to obtain the inner color features included in each of the subclasses, and then to output an inner color set of the corresponding subclass. For example, it is supposed that the subclass set *Set(TSR)* includes seven subclasses according to the inner colors, i.e., *Set(TSR)* = {$c1$, $c2$} + {$c3$, $c2$, $c4$} + {$c1$, $c5$} + {$c1$, $c2$, $c4$} + {$c2$, $c4$} + {$c2$, $c3$} + {$c1$, $c6$}.

As for the detected candidate road sign *candidate,* its inner color feature *Fcandidate* is extracted by utilizing the function *extractInnerColor,* as shown in the following equation (14).

$$extractInnerColor\,(candidate) = \{Fcandidate = (a1, a2, ..., am)\} \qquad (14)$$

Here $a1$, $a2$,..., $am$ stand for *m* components of the inner color feature *Fcandidate.*

After that, the degree of similarity between the candidate road sign *candidate* and each subclass $TSR_i$ is calculated, and the maximum degree of similarity S is obtained as shown in the following equation (15).

$$S = \max\{Similarity(candidate, TSR_i) \mid TSR_i \subseteq Set(TSR)\} \qquad (15)$$

Here the function *Similarity* is used to calculate the degree of similarity between the inner color set of the candidate road sign and the inner color set of each subclass. If the inner color set of the candidate road sign includes all the inner colors of one of the subclasses, and does not include other colors which this subclass does not have, then the degree of similarity between the candidate road sign and this subclass is the maximum.

If the maximum degree of similarity S is greater than a predetermined threshold value *threshold*1, and is obtained on the basis of the candidate road sign *candidate* and the *j - th* subclass, then the candidate road sign is recognized as belonging to the subclass $TSR_j$, and has the attribute of this subclass; otherwise, it may be determined that the candidate road sign is not a real road sign.

The function *Similarity* may be defined for determining the degree of similarity between the inner color set of the candidate road sign and the inner color set of each subclass.

In particular, for each subclass $TSR_i \in Set(TSR)$, if it is supposed that the number of the feature components of the corresponding subclass is g, and the feature components of the candidate road sign *candidate* is $a_t$ (*t* is an index), then when *u* is used to represent the number of feature components of the candidate road sign *candidate* included in the corresponding subclass, and *v* is used to represent the number of feature components of the candidate road sign *candidate* not included in the corresponding subclass, for each $a_t$, if $a_t \in TSR_i$, then *u = u* + 1; otherwise *v = v* + 1. Then a value *simValue* is calculated by *simValue = u/g - v/g*. Here this value *simValue* is used as the degree of similarity between the candidate road sign *candidate* and the corresponding subclass. In this way, the degree of similarity between the candidate road sign *candidate* and each subclass $TSR_i$ may be calculated. Consequently the maximum degree of similarity may be easily obtained too.

Furthermore the above mentioned standard inner feature of the standard road sign and the inner feature of the candidate road sign may also be inner texture features inside the outer outlines of the standard road sign and the candidate road sign, respectively.

In this circumstance, first an inner texture set *InnerLayout* of inner texture features probably existing in the standard road signs of a small class (i.e., the outer outline colors and the shapes of these standard road signs have been determined) is defined as shown in the following equation (16). Here the inner texture features may be divided into a corner feature *corner* and a gradient feature *gradient.*

$$InnerLayout = \{\{corner\}, \{gradient\}\} \qquad (16)$$

Next, a subclass set *Set(TSR)* is created based on the same inner texture features, as shown in the following equation (17).

$$Set(TSR) = \{TSR_i \mid extractInnerC \ \& \ G(TSR_i)\} \qquad (17)$$

Here the function *extractInnerC & G* is used to extract the inner corner feature and the gradient feature of each standard road sign, for example, on the basis of the Scale-Invariant Feature Transform (SIFT), and then to output an inner texture set of the corresponding subclass. The subclass set *Set(TSR)* includes, according to a limited number of combinations of its inner texture features, a limited number of subclasses *TSR_i*. Here *i* is an index, and is a natural number.

As for the detected candidate road sign *candidate,* its inner texture feature *Fcandidate* is extracted by utilizing the function *extractInnerColor,* as shown in the following equation (17).

$$extractInnerC \ \& \ G(candidate) = \{Fcandidate = (a1, a2, \ldots, am)\} \qquad (17)$$

Here *a*1, *a*2,..., *am* stand for *m* components (corner features and gradient features) of the inner texture feature *Fcandidate.*

After that, the degree of similarity between the candidate road sign *candidate* and each subclass *TSR_i* is calculated, and the maximum degree of similarity S is obtained as shown in the following equation (18).

$$S = \max\{Similarity(candidate, TSR_i) \mid TSR_i \subseteq Set(TSR)\} \qquad (18)$$

Here the function *Similarity* for calculating the degree of similarity by using the texture features is analogous to the above-mentioned function *Similarity* in the equation (15). In other words, those people skilled in the art may obtain the function *Similarity* for calculating the degree of similarity by using the texture features according to the above-mentioned function *Similarity* in the equation (15). For example, the calculations of the "corner feature" and the "gradient feature" (two features) in the function *Similarity* for calculating the degree of similarity by using the texture features may be accomplished on the basis of the calculation of the "color feature" (one feature) in the function *Similarity* for calculating the degree of similarity by using the color feature.

The function *Similarity* in the above equation (18) is used to calculate the degree of similarity between the inner texture set of the candidate road sign and the inner texture set of each subclass. For example, if the inner texture set of the candidate road sign includes all the inner texture features of one of the subclasses, and does not include other inner texture features which this subclass does not have, then the degree of similarity between the candidate road sign and this subclass is the maximum.

If the maximum degree of similarity S is greater than a predetermined threshold value *threshold*2, and is obtained on the basis of the candidate road sign *candidate* and the *j - th* subclass, then the candidate road sign is recognized as belonging to the subclass *TSR_j,* and has the attribute of this subclass; otherwise, it may be determined that the candidate road sign is not a real road sign.

In addition, it should be noted that the above mentioned "inner feature" is not limited to the above described inner color feature and inner texture feature, but may be extendable and self-defined.

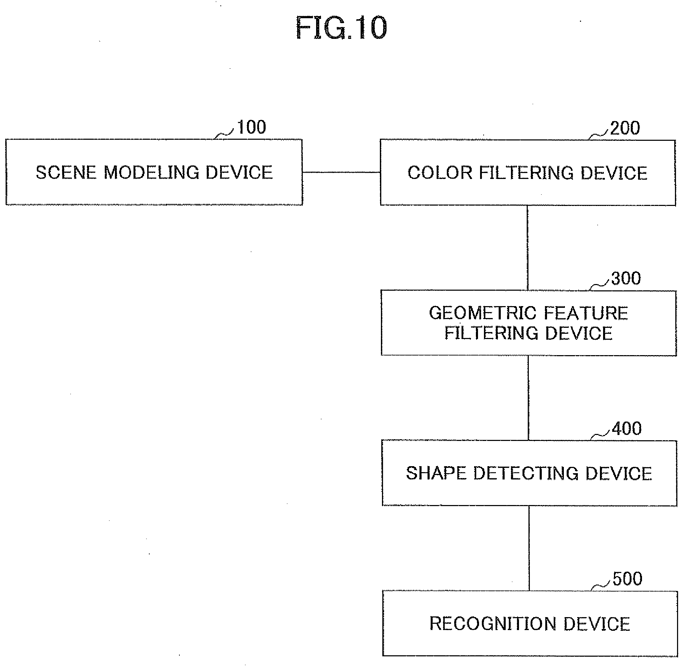

In what follows, a road sign detecting apparatus according to a second embodiment of the present invention is concretely illustrated by referring to FIG. 10.

FIG. 10 is an overall block diagram of the road sign detecting apparatus according to the second embodiment of the present invention.

As shown in FIG. 10, the road sign detecting apparatus, which may be used to execute the above described road sign detecting method, may comprise:

a scene modeling device 100, which may be used to execute the above described scene modeling step S100, configured to determine, on the basis of sample images in each of plural scenes, pass ranges (i.e., threshold ranges) of plural colors in each of the scenes;

a color filtering device 200, which may be used to execute the above described color filtering step S200, configured to determine a scene to which an image waiting for processing belongs, and then to carry out, by utilizing the pass ranges of the plural colors (determined by the scene modeling device 100) corresponding to the determined scene, color filtering with regard to the image waiting for processing so as to acquire binary images with regard to respective colors of the image waiting for processing;

a geometric feature filtering device, which may be used to execute the above described geometric feature filtering step S300, configured to perform connected domain analysis with regard to the acquired respective binary images so as to obtain geometric features of respective connected domains in each of the binary images, and then, for each of the binary images, to remove at least one connected domain not coinciding with predetermined standard road sign specifications, and to let at least one remaining connected domain be a candidate road sign;

a shape detecting device 400, which may be used to execute the shape detecting step S400, configured to detect the shape of the candidate road sign obtained by the geometric feature filtering device 300 according to a limited number of predetermined shapes; and

a recognition device 500, which may be used to execute the above described recognition step S500, configured to recognize, based on a degree of similarity between the inner feature of the candidate road sign and each of the inner features of standard road signs having attributes, the attribute of the candidate road sign.

Furthermore the scene modeling device 100 may include:

a first color space converting unit 120, which may be used to execute the above described first color space converting step S120, configured to convert the sample images in each of the plural scenes into HSV color space images, respectively;

a hue and saturation distribution determining unit 140, which may be used to execute the above described hue and saturation distribution determining step S140, configured to determine, based on the converted sample images (i.e., the HSV color space images) in each of the plural scenes, the hue and saturation distributions of the plural colors in the corresponding scene; and

a pass range determining unit 160, which may be used to execute the above described pass range determining step S160, configured to determine, according to predetermined pass ratios, pass ranges corresponding to the hue and saturation distributions of the plural colors in the corresponding scene.

Moreover, the color filtering device 200 may include:

a scene determining unit 220, which may be used to execute the above described scene determining step S220, configured to determine a scene, to which the image waiting for processing belongs, by utilizing a scene recognizing means or user intervention;

a second color space converting unit 240, which may be used to execute the above described second color space converting step S240, configured to convert the image waiting for processing into a HSV color space image; and

a binarization unit 260, which may be used to execute the above described binarization step S260, configured to perform, by utilizing the hue and saturation pass ranges of the plural colors corresponding to the determined scene, filtering with regard to the HSV color space image of the image waiting for processing so as to obtain binary images with regard to the respective colors of the image waiting for processing.

For each of the colors of the image waiting for processing, the binarization unit 260 may obtain the binary image with regard to the corresponding color by, only when the hue and saturation values of a pixel in the converted image waiting for processing are respectively within the hue and saturation pass ranges of the corresponding color, giving a high value (for example, "1") to this pixel, otherwise, a low value (for example, "0").

When the shape detecting device 400 executes the above described shape detecting step S400 according to a limited number of predetermined shapes, the predetermined shapes may be a circle, a triangle, and a rectangle.

The road sign detecting apparatus may classify sample road signs (for example, the standard road signs in a country) into large classes according to the outer outline colors of the sample road signs; then, for each of the large classes, to classify its members into small classes according to the shapes of its members; and then, for each of the small classes, to extract the inner features of its members, and according to the extracted inner features of its members, to further classify its members into subclasses corresponding to plural attributes.

The recognition device 500 may include:

an extraction unit 520, which is used to be execute the above described extraction step S520, configured to extract the inner feature of the candidate road sign whose outer outline color and shape has been determined;

a degree-of-similarity determining unit 540, which is used to execute the above described degree-of-similarity determining step S540, configured to determine a degree of similarity between the inner feature of the candidate road sign and each of the standard inner features of the standard road signs corresponding to the outer outline color and shape of the candidate road sign, having various attributes, and then to obtain the maximum degree of similarity; and

an attribute determining unit 560, which may be used to execute the attribute determining step S560, configured to determine, in a case where the obtained maximum degree of similarity is greater than a predetermined threshold value, that the candidate road sign has the attribute corresponding to the standard inner feature of the standard road sign by which the maximum degree of similarity is obtained.

The standard inner feature of the standard road sign and the inner feature of the candidate road sign may be the inner color features inside the outer outlines of the standard road sign and the candidate road sign, respectively. Furthermore the standard inner feature of the standard road sign and the inner feature of the candidate road sign may also be the inner texture features inside the outer outlines of the standard road sign and the candidate road sign, respectively.

The road sign detecting method and apparatus according to the embodiments of the present invention propose a technique of carrying out the road sign detection and recognition according to both the self-adaptive color filtering and the rough classification based fuzzy recognition, thereby being able to improve the flexibility of the road sign detection. First the color filtering based on a scene may perform more effective and robust image division so that it is convenient to carry out the follow-on detection and recognition. Then the fuzzy recognition may provide an effective balance between the road sign detection and the road sign recognition. In a word, the proposed technique may effectively reduce the misdetection rate, and may ensure a relatively high detection rate by extracting the inner features of the standard road signs and at least one candidate road sign; on the other hand, compared to the one-to-multiple template matching technique in the prior art, the proposed technique may more effectively reduce the calculation complexity, thereby being able to render the execution speed faster.

A series of operations described in this specification may be executed by hardware, software, or a combination of the hardware and software. When the operations are executed by the software, a computer program may be installed in a dedicated built-in storage device of a computer so that the computer (a processor) may execute the computer program. Alternatively, the computer program may be installed in a common purpose computer by which various types of processes may be executed so that the common purpose computer (a processor) may execute the computer program.

For example, the computer program may be stored in a recording medium such as a hard disk or a ROM (a read-only memory) in advance. Alternatively, the computer program may be temporarily or permanently stored (or recorded) in a movable recording medium such as a floppy disk, a CD-ROM (a compact disc read-only memory), a MO (a magneto-optical disk) disk, a DVD (a digital versatile disk), a magic disk, or a semiconductor storage device. In addition, it is also possible to provide this kind of movable recording medium as a software package.

## Claims

1. A method of detecting at least one road sign in an image waiting for processing, comprising:

   a step of determining a scene to which the image waiting for processing belongs;
   a color filtering step of filtering the colors of the image waiting for processing so as to acquire binary images by utilizing pass ranges of plural colors corresponding to the determined scene;
   a geometric feature filtering step of performing connected domain analysis with regard to the binary images so as to obtain geometric features of connected domains in each of the binary images, and then, for each of the binary images, removing connected domains not coinciding with predetermined standard road sign specifications, and letting remaining connected domains be candidate road signs;
   a shape detecting step of detecting a shape of each of the candidate road signs according to a limited number of predetermined shapes; and
   a recognition step of recognizing, based on a degree of similarity between an inner feature of the candidate road sign and each of standard inner features of plural standard road signs having different attributes, an attribute of the candidate road sign;
   **characterized by**

   a) a scene modelling step of determining, based on sample images in each of the plural scenes, the pass ranges of the plural colors in each of the plural scenes,

   wherein the scene modeling step comprises:

   a first color space converting step of converting the sample images in each of the plural scenes into HSV color space images;
   a hue and saturation distribution determining step of determining, based on the HSV color space images in each of the plural scenes, hue and saturation distributions of the plural colors in the corresponding scene independently; and

15

a pass range determining step of determining, according to predetermined pass ratios, pass ranges corresponding to the hue and saturation distributions of the plural colors in the corresponding scene, wherein the pass range corresponding to the hue distribution, respectively corresponding to the saturation distribution, of one of the plural colors in the corresponding scene is determined by:

in a first range [i,j] such as $0 \leq i < j \leq W$, [0,W] being the hue level range, respectively saturation level range, calculating a probability accumulation, which is a sum of a ratio of the number of pixels of each hue level, respectively saturation level, within the first range [i,j] to the total number of pixels;

selecting a second range from all first ranges [i,j] such as $0 \leq i < j \leq W$, wherein the probability accumulation is greater or equal to a predetermined threshold and the length of the second range is minimum; and

outputting the start point and the end point of the selected second range as the start point and the end point of the hue pass range, respectively saturation pass range, and

b) a classification step of classifying standard road signs into large classes according to outer outline colors of the standard road signs; then, for each of the large classes, classifying its members into small classes according to shapes of its members; and then, for each of the small classes, extracting inner features of its members, and classifying its members into subclasses having different attributes according to the extracted inner features of its members.

2. The method according to claim 1, wherein, the color filtering step comprises:

a scene determining step of determining a scene, to which the image waiting for processing belongs, by utilizing a scene recognizing means or a user intervention;

a second color space converting step of converting the image waiting for processing into a HSV color space image; and

a binarization step of performing, by utilizing the hue and saturation pass ranges of the plural, colors corresponding to the determined scene, filtering with regard to the HSV color space image of the image waiting for processing so as to obtain the binary images with regard to the respective colors of the image waiting for processing.

3. The method according to claim 2, wherein, in the binarization step, the binary images with regard to the respective colors of the image waiting for processing are obtained by:

for each of the colors of the image waiting for processing, if hue and saturation values of a pixel in the HSV color space image of the image waiting for processing are respectively within the hue and saturation pass ranges of the corresponding color, giving a high value to the pixel; otherwise, giving a low value to the pixel.

4. The method according to claim 1, wherein:

in the shape detecting step, the predetermined shapes are a circle, a triangle, and a rectangle.

5. The method according to claim 1, wherein, the recognition step comprises:

an extraction step of extracting the inner feature of the candidate road sign;

a degree-of-similarity determining step of determining a degree of similarity between the inner feature of the candidate road sign and each of the standard inner features of the plural standard road signs whose outer outline colors and shapes correspond to those of the candidate road sign, and then obtaining a maximum degree of similarity, wherein the degree of similarity is determined by

grouping the plural standard road signs whose outer outline colors and shapes corresponding to those of the candidate road sign into a plurality of subclasses, within each of which the standard road signs have the same or similar features;

for each subclass, determining a first value representing the total number of feature components of the candidate road sign included in the subclass, and a second value representing the total number of feature components which are not included in the subclass; and

calculating the degree of similarity as the difference between a ratio of the first value to the number of feature components of the corresponding subclass, and a ratio of the second value to the number of the feature components of the corresponding subclass; and

an attribute determining step of determining, in a case where the maximum degree of similarity is greater than a predetermined threshold value, that the attribute of the candidate road sign is one corresponding to the standard inner feature of the standard road sign by which the maximum similarity is obtained.

6. The method according to claim 5, wherein:

the standard inner feature of the plural standard road signs and the inner feature of the candidate road sign are inner color features inside the outer outlines of the plural standard road signs and the candidate road sign, respectively, wherein the maximum degree of similarity is obtained by

defining an inner color set *InnerColor* of inner colors existing in the plural standard road signs

$$InnerColor = \{c1, c2, \ldots cp\},$$

wherein $p$ is a natural number denoting the total number of inner colors exisiting in the plural road signs;

creating a subclass set *Set(TSR)*, wherein *TSR* represents the set of the plural standard road signs, based on the same inner color features,

$$Set(TSR) = \{TSR_i| \ extractInnerColor(TSR_i)\},$$

wherein $TSR_i$ is a subclass with $i$ a natural number denoting an index and the function *extractInnerColor* is given by

$$extractInnerColor(TSR_i) = \{TSR_i = (c1, c2, \ldots cg)\},$$

wherein g denotes the number of the feature components of the corresponding subclass;

extracting the inner color feature of the candidate road sign *Fcandidate* by utilizing the function *extractInnerColor*

$$extractInnerColor(candidate) = \{Fcandidate = (a1, a2, \ldots am)\},$$

wherein $a1$, $a2$,... $am$ stand for $m$ components of the inner color feature *Fcandidate;*

for each feature component of the candidate road sign $at$ with $t$ an index, if $at \in TSR_i$, increasing $u$ representing the number of feature components of the candidate road sign included in the corresponding subclass by one, otherwise increasing $v$ representing the number of feature components of the candidate road sign not included in the corresponding subclass by one;

obtaining a degree of similarity by evaluating a value of the function *Similarity,*

$$Similarity\ (candidate, TSR_i) = u/g - v/g;$$

and

obtaining the maximum degree of similarity S by

$$S = \max\{Similarity\ (candidate, TSR_i) \mid TSR_i \subseteq Set(TSR)\}.$$

7. The method according to claim 5, wherein:

the standard inner feature of the standard road sign and the inner feature of the candidate road sign are inner texture features inside the outer outlines of the standard road sign and the candidate road sign, respectively.

8. An apparatus of detecting at least one road sign in an image waiting for processing, comprising:

a scene modeling device configured to determine, based on sample images in each of plural scenes, pass

17

ranges of plural colors in each of the plural scenes;

a color filtering device configured to determine a scene to which the image waiting for processing belongs, and then carry out, by utilizing the pass ranges of the plural colors corresponding to the determined scene, color filtering with regard to the image waiting for processing so as to acquire binary images with regard to respective colors of the image waiting for processing;

a geometric feature filtering device configured to perform connected domain analysis with regard to the binary images so as to obtain geometric features of connected domains in each of the binary images, and then, for each of the binary images, to remove connected domains not coinciding with predetermined standard road sign specifications, and to let remaining connected domains be candidate road signs;

a shape detecting device configured to detect a shape of each of the candidate road signs according to a limited number of predetermined shapes; and

a recognition device configured to recognize, based on a degree of similarity between an inner feature of the candidate road sign and each of standard inner features of plural standard road signs having different attributes, an attribute of the candidate road sign, **characterized by** the following features:a first color space converting portion, configured to convert the sample images in each of the plural scenes into converted images;

a hue and saturation distribution determining step portion, configured to determine, based on the converted images in each of the plural scenes, hue and saturation distributions of the plural colors in the corresponding scene; and

a pass range determining portion, configured to determine, according to predetermined pass ratios, pass ranges corresponding to the hue and saturation distributions of the plural colors in the corresponding scene, wherein the pass range corresponding to the hue distribution, respectively corresponding to the saturation distribution, of one of the plural colors in the corresponding scene is determined by

in a first range [i,j] such as $0 \leq i < j \leq W$, [0,W] being the hue level range, respectively saturation level range, calculating a probability accumulation, which is a sum of a ratio of the number of pixels of each hue level, respectively saturation level, within the first range [i,j] to the total number of pixels;

selecting a second range from all first ranges [i,j] such as $0 \leq i < j \leq W$, wherein the probability accumulation is greater or equal to a predetermined threshold and the length of the second range is minimum; and

outputting the start point and the end point of the selected second range as the start point and the end point of the hue pass range, respectively saturation pass range, and

a classification device configured for classifying standard road signs into large classes according to outer outline colors of the standard road signs; then, for each of the large classes, classifying its members into small classes according to shapes of its members; and then, for each of the small classes, extracting inner features of its members, and classifying its members into subclasses having different attributes according to the extracted inner features of its members.

## Patentansprüche

1. Verfahren zum Detektieren mindestens eines Straßenschildes in einem Bild, das auf eine Verarbeitung wartet, das Folgendes umfasst:

einen Schritt des Bestimmens einer Szene, zu der das Bild, das auf eine Verarbeitung wartet, gehört;

einen Farbfilterungsschritt des Filterns der Farben des Bildes, das auf eine Verarbeitung wartet, um binäre Bilder zu erfassen, durch Verwenden von Durchlassbereichen mehrerer Farben, die der bestimmen Szene entsprechen;

einen Schritt des Filterns geometrischer Merkmale des Ausführens einer Analyse verbundener Bereiche bezüglich der binären Bilder, um geometrische Merkmale verbundener Bereiche in jedem der binären Bilder zu erhalten, und dann des Entfernens verbundener Bereiche, die nicht mit vorgegebenen Standardstraßenschildspezifikationen übereinstimmen, für jedes der binären Bilder und des Zulassens, dass die verbleibenden verbundenen Bereiche Kandidatenstraßenschilder sind;

einen Formdetektionsschritt des Detektierens einer Form jedes der Kandidatenstraßenschilder gemäß einer begrenzten Anzahl vorgegebener Formen; und

einen Erkennungsschritt des Erkennens anhand eines Grades der Ähnlichkeit zwischen einem inneren Merkmal des Kandidatenstraßenschildes und jedem der inneren Standardmerkmale mehrerer Standardstraßenschilder mit verschiedenen Attributen eines Attributs des Kandidatenstraßenschildes;

**gekennzeichnet durch**:

a) einen Szenenmodellierschritt des Bestimmens anhand von Musterbildern in jeder der mehreren Szenen der Durchlassbereiche der mehreren Farben in jeder der mehreren Szenen,

wobei der Szenenmodellierschritt umfasst:

einen ersten Farbraumumsetzungsschritt des Umsetzens der Musterbilder in jeder der mehreren Szenen in HSV-Farbraumbilder;
einen Farbton- und Sättigungsverteilungsbestimmungsschritt des unabhängigen Bestimmens von Farbton- und Sättigungsverteilungen der mehreren Farben in der entsprechenden Szene anhand der HSV-Farbraumbilder in jeder der mehreren Szenen; und

einen Durchlassbereichsbestimmungsschritt des Bestimmens von Durchlassbereichen, die den Farbton- und Sättigungsverteilungen der mehreren Farben in der entsprechenden Szene entsprechen, gemäß vorgegebenen Passverhältnissen, wobei der Durchlassbereich einer der mehreren Farben in der entsprechenden Szene, der der Farbtonverteilung bzw. der Sättigungsverteilung entspricht, bestimmt ist **durch**:

in einem ersten Bereich [i, j], wie etwa $0 \leq i \leq j \leq W$, wobei [0, W] der Farbtonstufenbereich, bzw. der Sättigungsstufenbereich ist, Berechnen einer Wahrscheinlichkeitsansammlung, die eine Summe eines Verhältnisses der Anzahl der Pixel jeder Farbtonstufe bzw. Sättigungsstufe innerhalb des ersten Bereichs [i, j] zu der gesamten Anzahl von Pixeln ist;
Auswählen eines zweiten Bereichs aus allen ersten Bereichen [i, j], wie etwa $0 \leq i \leq j \leq W$, wobei die Wahrscheinlichkeitsansammlung größer oder gleich einem vorgegebenem Schwellenwert ist und die Länge des zweiten Bereichs minimal ist; und
Ausgeben des Startpunkts und des Endpunkts des ausgewählten zweiten Bereichs als den Startpunkt und den Endpunkt des Farbtondurchlassbereichs bzw. des Sättigungsdurchlassbereichs und

b) einen Klassifizierungsschritt des Klassifizierens von Standardstraßenschildem in große Klassen gemäß Farben äußerer Umrisse der Standardstraßenschilder; dann für jede der großen Klassen Klassifizieren ihrer Mitglieder in kleine Klassen gemäß den Formen ihrer Mitglieder; und dann für jede der kleinen Klassen Extrahieren innerer Merkmale ihrer Mitglieder und Klassifizieren ihrer Mitglieder in Unterklassen mit verschiedenen Attributen gemäß den extrahierten inneren Merkmalen ihrer Mitglieder.

2. Verfahren nach Anspruch 1, wobei der Farbfilterungsschritt Folgendes umfasst:

einen Szenenbestimmungsschritt des Bestimmens einer Szene, zu der das Bild, das auf eine Verarbeitung wartet, gehört, durch Verwenden von Szenenerkennungsmitteln oder eines Anwendereingriffs;
einen zweiten Farbraumumsetzungsschritt des Umsetzens des Bildes, das auf eine Verarbeitung wartet, in ein HSV-Farbraumbild; und
einen Binarisierungsschritt des Ausführens einer Filterung bezüglich des HSV-Farbraumbildes des Bildes, das auf eine Verarbeitung wartet, durch Verwenden der Farbton- und Sättigungsdurchlassbereiche der mehreren Farben, die der bestimmten Szene entsprechen, um die binären Bilder bezüglich der jeweiligen Farben des Bildes, das auf eine Verarbeitung wartet, zu erhalten.

3. Verfahren nach Anspruch 2, wobei in dem Binarisierungsschritt die binären Bilder bezüglich der jeweiligen Farben des Bildes, das auf eine Verarbeitung wartet, erhalten werden durch:

für jede der Farben des Bildes, das auf eine Verarbeitung wartet, dann, wenn Farbton- und Sättigungswerte eines Pixels in dem HSV-Farbraumbild des Bildes, das auf eine Verarbeitung wartet, jeweils innerhalb der Farbton- und Sättigungsdurchlassbereiche der entsprechenden Farbe liegen, Vergeben eines hohen Wertes an das Pixel, anderenfalls Vergeben eines niedrigen Wertes an das Pixel.

4. Verfahren nach Anspruch 1, wobei:

in dem Formdetektionsschritt die vorgegebenen Formen ein Kreis, ein Dreieck und ein Rechteck sind.

5. Verfahren nach Anspruch 1, wobei der Erkennungsschritt umfasst:

einen Extraktionsschritt des Extrahierens des inneren Merkmals des Kandidatenstraßenschildes;

einen Ähnlichkeitsgradbestimmungsschritt des Bestimmens eines Grades der Ähnlichkeit zwischen dem inneren Merkmal des Kandidatenstraßenschildes und jedem der inneren Standardmerkmale der mehreren Standardstraßenschilder, deren Farben und Formen der äußeren Umrisse denen des Kandidatenstraßenschildes entsprechen, und dann des Erhaltens eines maximalen Grades einer Ähnlichkeit, wobei der Grad der Ähnlichkeit bestimmt ist durch:

Gruppieren der mehreren Standardstraßenschilder, deren Farben und Formen der äußeren Umrisse denen des Kandidatenstraßenschildes entsprechen, in mehrere Unterklassen, in denen die Standardstraßenschilder jeweils dieselben oder ähnliche Merkmale besitzen;

für jede Unterklasse Bestimmen eines ersten Wertes, der die gesamte Anzahl von Merkmalskomponenten des Kandidatenstraßenschildes, das in der Unterklasse enthalten ist, repräsentiert und eines zweiten Wertes, der die gesamte Anzahl von Merkmalskomponenten, die nicht in der Unterklasse enthalten sind, repräsentiert; und

Berechnen des Grades der Ähnlichkeit als den Unterschied zwischen einem Verhältnis des ersten Wertes zu der Anzahl der Merkmalskomponenten der entsprechenden Unterklasse und einem Verhältnis des zweiten Wertes zu der Anzahl der Merkmalskomponenten der entsprechenden Unterklasse; und

einen Attributbestimmungsschritt des Bestimmens in einem Fall, in dem der maximale Grad der Ähnlichkeit größer als ein vorgegebener Schwellwert ist, dass das Attribut des Kandidatenstraßenschildes eines ist, das dem inneren Standardmerkmal des Standardstraßenschildes entspricht, durch das die maximale Ähnlichkeit erhalten wird.

6. Verfahren nach Anspruch 5, wobei:

das innere Standardmerkmal der mehreren Standardstraßenschilder und das innere Merkmal des Kandidatenstraßenschildes jeweils innere Farbmerkmale innerhalb der äußeren Umrisse der mehreren Standardstraßenschilder und des Kandidatenstraßenschildes sind, wobei der maximale Grad der Ähnlichkeit erhalten wird durch:

Definieren einer inneren Farbgruppe *InnerColor* innerer Farben, die in den mehreren Standardstraßenschilder vorhanden sind,

$$InnerColor = \{c1, c2, \ldots cp\},$$

wobei $p$ eine natürliche Zahl ist, die die gesamte Anzahl innerer Farben bezeichnet, die in den mehreren Straßenschildern vorhanden sind;

Erzeugen einer Unterklassengruppe *Set*(*TSR*), wobei *TSR* die Gruppe der mehreren Standardstraßenschilder anhand derselben inneren Farbmerkmale repräsentiert,

$$Set(TSR) = \{TSR_i | extractInnerColor(TSR_i)\},$$

wobei $TSR_i$ eine Unterklasse ist, wobei $i$ eine natürliche Zahl ist, die einen Index bezeichnet, und die Funktion *extractInnerColor* gegeben ist durch:

$$extractInnercolor(TSR_i) = \{ TSR_i = (c1, c2, \ldots cp)\},$$

wobei g die Anzahl der Merkmalkomponenten der entsprechenden Unterklasse bezeichnet;

Extrahieren des inneren Farbmerkmals des Kandidatenstraßenschildes *Fcandidate* durch Verwenden der Funktion *extractInnerColor*

$$extractInnerColor(candidate) = \{Fcandidate = (a1, a2, \ldots am)\},$$

wobei *a1, a2, ... am* für *m* Komponenten des inneren Farbmerkmals *Fcandidate* stehen;

für jede Merkmalkomponente des Kandidatenstraßenschildes *at,* wobei *t* ein Index ist, wenn at $\in$ *TSR_i,* Erhöhen von *u,* das die Anzahl der Merkmalkomponenten des Kandidatenstraßenschildes repräsentiert, das in der entsprechenden Unterklasse enthalten ist, um Eins, anderenfalls Erhöhen von *v*, das die Anzahl der Merkmalkomponenten des Kandidatenstraßenschildes repräsentiert, das nicht in der entsprechenden Unterklasse enthalten ist, um Eins;

Erhalten einen Grades der Ähnlichkeit durch Auswerten eines Wertes der Funktion *Similarity,*

$$Similarity(candidate, TSR_i) = u/g - v/g;$$

und

Erhalten des maximalen Grades der Ähnlichkeit S durch:

$$S = \max\{Similarity(candidate, TSR_i)| \ TSR_i \subseteq Set(TSR)\}.$$

7.  Verfahren nach Anspruch 5, wobei:

das innere Standardmerkmal des Standardstraßenschildes und das innere Merkmal des Kandidatenstraßenschildes jeweils innere Strukturmerkmale innerhalb der äußeren Umrisse des Standardstraßenschildes und des Kandidatenstraßenschildes sind.

8.  Vorrichtung zum Detektieren mindestens eines Straßenschildes in einem Bild, das auf eine Verarbeitung wartet, die Folgendes umfasst:

eine Szenenmodelliervorrichtung, die konfiguriert ist, anhand von Musterbildern in jeder von mehreren Szenen Durchlassbereiche mehrerer Farben in jeder der mehreren Szenen zu bestimmen;

eine Farbfiltervorrichtung, die konfiguriert ist, eine Szene zu bestimmen, zu der das Bild, das auf eine Verarbeitung wartet, gehört, und dann durch Verwenden der Durchlassbereiche der mehreren Farben, die der bestimmten Szene entsprechen, eine Farbfilterung bezüglich des Bildes, das auf eine Verarbeitung wartet, auszuführen, um binäre Bilder bezüglich jeweiliger Farben des Bildes, das auf eine Verarbeitung wartet, zu erfassen;

eine Vorrichtung zum Filtern geometrischer Merkmale, die konfiguriert ist, eine Analyse verbundener Bereiche bezüglich der binären Bilder auszuführen, um geometrische Merkmale verbundener Bereiche in jedem der binären Bilder zu erhalten, und dann für jedes der binären Bilder verbundene Bereiche zu entfernen, die nicht mit vorgegebenen Standardstraßenschildspezifikationen übereinstimmen, und zuzulassen, dass verbleibende verbundene Bereiche Kandidatenstraßenschilder sind;

eine Formdetektionsvorrichtung, die konfiguriert ist, eine Form jedes der Kandidatenstraßenschilder gemäß einer begrenzten Anzahl von vorgegebenen Formen zu detektieren; und

eine Erkennungsvorrichtung, die konfiguriert ist, anhand eines Grades einer Ähnlichkeit zwischen einem inneren Merkmal des Kandidatenstraßenschildes und jedem inneren Standardmerkmal mehrerer Standardstraßenschilder mit verschiedenen Attributen ein Attribut des Kandidatenstraßenschildes zu erkennen, die durch die folgenden Merlanale gekennzeichnet ist: einen ersten Farbraumumsetzungsteil, der konfiguriert ist, die Musterbilder in jeder der mehreren Szenen in umgesetzte Bilder umzusetzen;

einen Farbton- und Sättigungsverteilungsbestimmungsschrittteil, der konfiguriert ist, anhand der umgesetzten Bilder in jeder der mehreren Szenen Farbton- und Sättigungsverteilungen der mehreren Farben in der entsprechenden Szene zu bestimmen; und

einen Durchlassbereichsbestimmungsteil, der konfiguriert ist, gemäß vorgegebenen Durchlassbereichen Durchlassbereiche zu bestimmen, die den Farbton- und Sättigungsverteilungen der mehreren Farben in der entsprechenden Szene entsprechen, wobei der Durchlassbereich einer der mehreren Farben in der entsprechenden Szene, der der Farbtonverteilung bzw. der Sättigungsverteilung entspricht, bestimmt ist durch:

in einem ersten Bereich [i, j], wie etwa $0 \le i \le j \le W$, wobei [0, W] der Farbtonstufenbereich, bzw. der Sättigungsstufenbereich ist, Berechnen einer Wahrscheinlichkeitsansammlung, die eine Summe eines Verhältnisses der Anzahl der Pixel jeder Farbtonstufe, bzw. Sättigungsstufe, innerhalb des ersten Bereichs [i, j] zu der gesamten Anzahl der Pixel ist;

Auswählen eines zweiten Bereichs aus allen ersten Bereichen [i, j], wie etwa $0 \le i \le j \le W$, wobei die Wahrscheinlichkeitsansammlung größer als ein vorgegebener Schwellenwert oder gleich diesem ist und die Länge des zweiten Bereichs minimal ist; und

Ausgeben des Startpunkts und des Endpunkts des ausgewählten zweiten Bereichs als den Startpunkt und den Endpunkt des Farbtondurchlassbereichs, bzw. des Sättigungsdurchlassbereichs, und
eine Klassifizierungsvorrichtung, die konfiguriert ist, Standardstraßenschilder gemäß äußeren Umrissfarben der Standardstraßenschilder in große Klassen zu klassifizieren; dann für jede der großen Klassen ihre Mitglieder gemäß den Formen ihrer Mitglieder in kleine Klassen zu klassifizieren; und dann für jede der kleinen Klassen innere Merkmale ihrer Mitglieder zu extrahieren und ihre Mitglieder in Unterklassen mit verschiedenen Attributen gemäß den extrahierten inneren Merkmalen ihrer Mitglieder zu klassifizieren.

**Revendications**

1. Procédé de détection d'au moins un panneau de signalisation dans une image en attente de traitement, comprenant :

   une étape consistant à déterminer une scène à laquelle appartient l'image en attente de traitement ;
   une étape de filtrage des couleurs consistant à filtrer les couleurs de l'image en attente de traitement de manière à acquérir des images binaires en utilisant des bandes passantes de plusieurs couleurs correspondant à la scène déterminée ;
   une étape de filtrage de caractéristique géométrique consistant à appliquer une analyse de domaines connectés aux images binaires de manière à obtenir des caractéristiques géométriques de domaines connectés dans chacune des images binaires, puis, pour chacune des images binaires, supprimer des domaines connectés ne coïncidant pas avec des spécifications de panneaux de signalisation standards prédéterminées, et garder les domaines connectés restants en tant que panneaux de signalisation candidats ;
   une étape de détection de forme consistant à détecter une forme de chacun des panneaux de signalisation candidats d'après un nombre limité de formes prédéterminées ; et
   une étape de reconnaissance consistant à reconnaître un attribut du panneau de signalisation candidat en se fondant sur un degré de similitude entre une caractéristique intérieure du panneau de signalisation candidat et chacune des caractéristiques intérieures standard de plusieurs panneaux de signalisation standards ayant des attributs différents ;
   **caractérisé par**

   a) une étape de modelage de scène consistant à déterminer les bandes passantes des couleurs dans chacune des scènes en se fondant sur des images échantillon dans chacune des scènes,

   où l'étape de modelage de scène comprend :

   une première étape de conversion d'espace de couleur consistant à convertir les images échantillon dans chacune des scènes en images d'espace de couleur TSV ;
   une étape de détermination de distribution de teinte et saturation consistant à déterminer, indépendamment les unes des autres, des distributions de teinte et saturation des couleurs dans la scène correspondante en se fondant sur les images d'espace de couleur TSV dans chacune des scènes ; et
   une étape de détermination de bande passante consistant à déterminer, selon des ratios passants prédéterminés, des bandes passantes correspondant aux distributions de teinte et de saturation des couleurs dans la scène correspondante, où la bande passante correspondant à la distribution de teinte, correspondant respectivement à la distribution de saturation, d'une des couleurs dans la scène correspondante est déterminée en:

   calculant, dans un premier intervalle [i,j], tel que $0 \leq i < j \leq W$, [0,W] étant l'intervalle de niveaux de teinte, respectivement l'intervalle de niveaux de saturation, une accumulation de probabilités, qui est une somme d'un ratio entre le nombre de pixels de chaque niveau de teinte, respectivement de chaque niveau de saturation, dans le premier intervalle [i, j] et le nombre total de pixels ;
   sélectionner un second intervalle parmi tous les premiers intervalles [i, j], tel que $0 \leq i < j \leq W$, où l'accumulation de probabilités est plus grande ou égale à un seuil prédéterminé et la longueur du second intervalle est minimale ; et
   sortir le point de départ et le point final du second intervalle sélectionné en tant que point de départ et point final de la bande passante de teinte, respectivement de la bande passante de saturation, et

   b) une étape de classification consistant à classer des panneaux de signalisation standards dans des grandes catégories selon les couleurs de contour extérieur des panneaux de signalisation standards ; puis, pour chacune des grandes catégories, classer ses membres dans des petites catégories selon les formes

EP 2 575 077 B1

de ses membres ; puis, pour chacune des petites catégories, extraire des caractéristiques intérieures de ses membres et classer ses membres dans des sous-catégories ayant différents attributs selon les caractéristiques internes extraites de ses membres.

2. Procédé selon la revendication 1, où l'étape de filtrage de couleurs comprend :

une étape de détermination de scène consistant à déterminer une scène à laquelle appartient l'image en attente de traitement en utilisant des moyens de reconnaissance de scène ou l'intervention d'un utilisateur ;
une seconde étape de conversion d'espace de couleurs consistant à convertir l'image en attente de traitement en une image d'espace de couleurs TSV ; et
une étape de binarisation consistant à effectuer un filtrage, en ce qui concerne l'image d'espace de couleurs TSV, de l'image en attente de traitement, en utilisant les bandes passantes de teinte et de saturation des couleurs correspondant à la scène déterminée, de manière à obtenir des images binaires en ce qui concerne les couleurs respectives de l'image en attente de traitement.

3. Procédé selon la revendication 2, où, lors de l'étape de binarisation, les images binaires en ce qui concerne les couleurs respectives de l'image en attente de traitement sont obtenues en:

attribuant, pour chacune des couleurs de l'image en attente de traitement, une valeur haute à un pixel, si les valeurs de teinte et de saturation du pixel dans l'image d'espace de couleurs TSV de l'image en attente de traitement se situent respectivement dans les bandes passantes de teinte et de saturation de la couleur correspondante ; et sinon, attribuer une valeur basse au pixel.

4. Procédé selon la revendication 1, où :

lors de l'étape de détection de forme, les formes prédéterminées sont un cercle, un triangle et un rectangle.

5. Procédé selon la revendication 1, où l'étape de reconnaissance comprend :

une étape d'extraction consistant à extraire la caractéristique intérieure du panneau de signalisation candidat ;
une étape de détermination de degré de similitude consistant à déterminer un degré de similitude entre la caractéristique intérieure du panneau de signalisation candidat et chacune des caractéristiques intérieures standard des panneaux de signalisation standards dont les couleurs de contour extérieur et formes correspondent à celles du panneau de signalisation candidat, puis obtenir un degré de similitude maximal, où le degré de similitude est déterminé
en regroupant les panneaux de signalisation standards dont les couleurs de contour extérieur et les formes correspondent à celles du panneau de signalisation candidat en une pluralité de sous-catégories, dans chacune desquelles les panneaux de signalisation standards ont les mêmes caractéristiques ou des caractéristiques similaires ;
en déterminant, pour chaque sous-catégorie, une première valeur représentant le nombre total de composants de caractéristique du panneau de signalisation inclus dans la sous-catégorie, et une seconde valeur représentant le nombre de total de composants de caractéristique qui ne sont pas inclus dans la sous-catégorie ; et
en calculant le degré de similitude en tant que différence entre un ratio entre la première valeur et le nombre de composants de caractéristique de la sous-catégorie correspondante, et un ratio entre la seconde valeur et le nombre de composants de caractéristique de la sous-catégorie correspondante ; et
une étape de détermination d'attribut consistant à déterminer, dans un cas où le degré de similitude maximum est supérieur à une valeur seuil prédéterminée, que l'attribut du panneau de signalisation candidat correspond à la caractéristique intérieure standard du panneau de signalisation standard par lequel la similitude maximale est obtenue.

6. Procédé selon la revendication 5, où :

la caractéristique intérieure standard des panneaux de signalisation standard et la caractéristique intérieure du panneau de signalisation candidat sont des caractéristiques de couleur intérieure à l'intérieur des contours extérieurs des panneaux de signalisation standards et du panneau de signalisation candidat, respectivement, où le degré maximum de similitude est obtenu :

en définissant un ensemble de couleurs intérieures *InnerColor* de couleurs intérieures existant dans les panneaux de signalisation standards

$$InnerColor = \{c1, c2, ... cp\},$$

où $p$ est un nombre naturel indiquant le nombre total de couleurs intérieures existant dans les panneaux de signalisation ;
en créant un ensemble de sous-catégories *Set(TSR)*, où *TSR* représente l'ensemble de panneaux de signalisation standards, en se fondant sur les mêmes caractéristiques de couleurs intérieures,

$$Set(TSR) = \{TSR_i | extractInnerColor(TSR_i)\} \, ;$$

où *TSR$_i$* est une sous-catégorie et $i$ est un nombre naturel indiquant un index et la fonction *extractInnerColor* est donnée par

$$extractInnerColor(TSR_i) = \{TSR_i = (c1, c2, ... cg)\},$$

où g indique le nombre de composants de caractéristiques de la sous-catégorie correspondante ;
en extrayant la caractéristique de couleur intérieure du panneau de signalisation candidat *Fcandidate* en utilisant la fonction *extractInnerColor*

$$extractInnerColor(candidate) = \{Fcandidate = (a1, a2, ... am)\},$$

où *a1, a2, ... am* représente *m* composants de la caractéristique de couleur intérieure *Fcandidate* ;
pour chaque composant de caractéristique de panneau de signalisation candidat *at, t* étant un index, si *at* $\in$ *TSR$_i$*, en augmentant *u* qui représente le nombre de composants de caractéristique du panneau de signalisation candidat inclus dans la sous-catégorie correspondante, de un, et sinon en augmentant *v*, qui représente le nombre de composants de caractéristique du panneau de signalisation candidat non inclus dans la sous-catégorie correspondante, de un ;
en obtenant un degré de similitude en évaluant une valeur de la fonction *Similarity,*

$$Similarity(candidate, TSR_i) = u/g - v/g \, ;$$

et
en obtenant le degré de similitude maximal S par

$$S = max\{Similariy(candidate, TSR_i | TSR_i \subseteq Set(TSR)\}.$$

**7.** Procédé selon la revendication 5, où :

la caractéristique intérieure standard du panneau de signalisation standard et la caractéristique intérieure du panneau de signalisation candidat sont des caractéristiques de texture intérieure à l'intérieur des contours extérieurs du panneau de signalisation standard et du panneau de signalisation candidat, respectivement.

**8.** Appareil de détection d'au moins un panneau de signalisation dans une image en attente de traitement, comprenant :

un dispositif de modelage de scène configuré pour déterminer les bandes passantes des couleurs dans chacune des scènes en se fondant sur des images échantillon dans chacune des scènes,
un dispositif de filtrage des couleurs configuré pour déterminer une scène à laquelle appartient l'image en attente de traitement, puis pour appliquer un filtrage de couleurs à l'image en attente de traitement de manière à acquérir des images binaires en ce qui concerne les couleurs respectives de l'image en attente de traitement, en utilisant des bandes passantes de plusieurs couleurs correspondant à la scène déterminée ;

un dispositif de filtrage de caractéristiques géométriques configuré pour appliquer une analyse de domaines connectés aux images binaires de manière à obtenir des caractéristiques géométriques de domaines connectés dans chacune des images binaires, puis, pour chacune des images binaires, supprimer des domaines connectés ne coïncidant pas avec des spécifications de panneau de signalisation standard prédéterminées, et garder les domaines connectés restants en tant que panneaux de signalisation candidats ;

un dispositif de détection de forme configuré pour détecter une forme de chacun des panneaux de signalisation candidats d'après un nombre limité de formes prédéterminées ; et

un dispositif de reconnaissance configuré pour reconnaître un attribut du panneau de signalisation candidat en se fondant sur un degré de similitude entre une caractéristique intérieure du panneau de signalisation candidat et chacune des caractéristiques intérieures standard de plusieurs panneaux de signalisation standard ayant des attributs différents ;

**caractérisé par** les éléments suivants : une première partie de conversion d'espace de couleurs configurée pour convertir les images échantillon dans chacune des scènes en des images converties ;

une partie d'étape de détermination de distribution de teinte et de saturation configurée pour déterminer des distributions de teinte et de saturation des couleurs dans la scène correspondante en se fondant sur les images converties dans chacune des scènes ; et

une partie de détermination de bande passante configurée pour déterminer, selon des ratios passants prédéterminés, des bandes passantes correspondant aux distributions de teinte et de saturation des couleurs dans la scène correspondante, où la bande passante correspondant à la distribution de teinte, correspondant respectivement à la distribution de saturation, d'une des couleurs dans la scène correspondante est déterminée en:

calculant, dans un premier intervalle $[i,j]$, tel que $0{\le}i{<}j{\le}W$, $[0,W]$ étant l'intervalle de niveaux de teinte, respectivement l'intervalle de niveaux de saturation, une accumulation de probabilités, qui est une somme d'un ratio entre le nombre de pixels de chaque niveau de teinte, respectivement de chaque niveau de saturation, dans le premier intervalle $[i, j]$ et le nombre total de pixels ;

sélectionner un second intervalle parmi tous les premiers intervalles $[i, j]$, tel que $0{\le}i{<}j{\le}W$, où l'accumulation de probabilité est plus grande ou égale à un seuil prédéterminé et la longueur du second intervalle est minimale ; et

sortir le point de départ et le point final du second intervalle sélectionné en tant que point de départ et point final de la bande passante de teinte, respectivement de la bande passante de saturation, et

un dispositif de classification configuré pour classer des panneaux de signalisation standards dans des grandes catégories selon les couleurs de contour extérieur des panneaux de signalisation standards ; puis, pour chacune des grandes catégories, classer ses membres dans des petites catégories selon les formes de ses membres ; puis, pour chacune des petites catégories, extraire des caractéristiques intérieures de ses membres et classer ses membres dans des sous-catégories ayant différents attributs selon les caractéristiques internes extraites de ses membres.

# FIG.1

EP 2 575 077 B1

# FIG.2

S100

BASED ON SAMPLE IMAGES IN EACH OF SCENES, DETERMINING PASS RANGES OF PLURAL COLORS IN CORRESPONDING SCENE

S200

DETERMINING SCENE TO WHICH IMAGE WAITING FOR PROCESSING BELONGS, AND THEN PERFORMING, BY USING PASS RANGES OF PLURAL COLORS CORRESPONDING TO DETERMINED SCENE, COLOR FILTERING TO IMAGE WAITING FOR PROCESSING SO AS TO ACQUIRE BINARY IMAGES

S300

PERFORMING CONNECTED DOMAIN ANALYSIS TO EACH BINARY IMAGE SO AS TO OBTAIN GEOMETRIC FEATURES OF CONNECTED DOMAINS, AND THEN REMOVING NON-ROAD SIGN CONNECTED DOMAIN, AND LETTING REMAINING CONNECTED DOMAIN BE CANDIDATE ROAD SIGN

S400

DETECTING SHAPE OF CANDIDATE ROAD SIGN ACCORDING TO LIMITED NUMBER OF PREDETERMINED SHAPES

S500

BASED ON DEGREES OF SIMILARITY OF INNER FEATURE BETWEEN CANDIDATE ROAD SIGN AND STANDARD ROAD SIGNS HAVING DIFFERENT ATTRIBUTES, DETERMINING ATTRIBUTE OF CANDIDATE ROAD SIGN

# FIG.3

S120

CONVERTING SAMPLE IMAGES IN EACH
SCENE INTO HSV COLOR SPACE IMAGES

S140

BASED ON HSV COLOR SPACE IMAGES IN
EACH SCENE, DETERMINING HUE AND
SATURATION DISTRIBUTIONS OF PLURAL
COLORS IN THIS SCENE

S160

ACCORDING TO PREDETERMINED PASS
RATIOS, DETERMINING PASS RANGES OF
HUE AND SATURATION DISTRIBUTIONS OF
PLURAL COLOR IN CORRESPONDING SCENE

# FIG.4A

# FIG.4B

# FIG.5

# FIG.6

S220

BY USING SCENE RECOGNIZING MEANS OR USER INTERVENTION, DETERMINING SCENE TO WHICH IMAGE WAITING FOR PROCESSING BELONGS

S240

CONVERTING IMAGE WAITING FOR PROCESSING INTO HSV COLOR SPACE IMAGE

S260

BY USING HUE AND SATURATION PASS RANGES OF PLURAL COLORS, PERFORMING FILTERING TO HSV COLOR SPACE IMAGE OF IMAGE WAITING FOR PROCESSING TO OBTAIN BINARY IMAGES

# FIG.7A

# FIG.7B

SMALL CLASSES

SUBCLASS

SUBCLASS

LARGE CLASSES

SUBCLASS

OUTER OUTLINE: RED

SUBCLASS

ROAD SIGNS

OUTER OUTLINE: YELLOW

SUBCLASS

SUBCLASS

OUTER OUTLINE: BLUE

SUBCLASS

SUBCLASS

SUBCLASS

SUBCLASS

FIG.8

# FIG.9

S520

EXTRACTING INNER FEATURE OF
CANDIDATE ROAD SIGN

S540

DETERMINING DEGREES OF SIMILARITY OF
INNER FEATURE BETWEEN CANDIDATE ROAD
SIGN AND STANDARD ROAD SIGNS WHOSE
OUTER OUTLINE COLORS AND SHAPES
CORRESPOND TO THOSE OF CANDIDATE
ROAD SIGN, AND THEN OBTAINING MAXIMUM
DEGREE OF SIMILARITY

S560

IF MAXIMUM DEGREE OF SIMILARITY IS
GREATER THAN PREDETERMINED
THRESHOLD VALUE, ATTRIBUTE OF
CANDIDATE ROAD SIGN IS DETERMINED AS
ONE CORRESPONDING TO INNER FEATURE
OF STANDARD ROAD SIGN BY WHICH
MAXIMUM SIMILARITY IS OBTAINED

# FIG.10

SCENE MODELING DEVICE ~100

COLOR FILTERING DEVICE ~200

GEOMETRIC FEATURE FILTERING DEVICE ~300

SHAPE DETECTING DEVICE ~400

RECOGNITION DEVICE ~500

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20080002891 A1
- US 2009217832 A
- CN 1014702197 A

### Non-patent literature cited in the description

- Road-Sign Detection and Recognition Based on Support Vector Machines. **SATURNINO MALDONADO-BASCON et al.** IEEE TRANSACTIONS ON INTELLIGENT TRANSPORTATION SYSTEMS. IEEE, 04 June 2007, vol. 8, 264-278

- **XIAOHONG GAO et al.** Colour Vision Model-Based Approach for Segmentation of Traffic Signs. *EUASIP JOURNAL ON IMAGE AND VIDEO PROCESSING,* 13 December 2007, vol. 13 (2), 349-7